# EUROPEAN PATENT SPECIFICATION

(11) **EP 4 685 696 B1**
(45) Date of publication and mention of the grant of the patent: **02.12.2026**
(21) Application number: 25188745.1
(22) Date of filing: 10.07.2025
(51) Int. Cl.: G06N 3/045, G06N 3/0475, G06F 9/50

(54) **DYNAMICALLY RECONFIGURABLE LLM INFERENCE CLUSTER**
DYNAMISCH REKONFIGURIERBARES LLM-INFERENZCLUSTER
GRAPPE D'INFÉRENCES LLM RECONFIGURABLE DYNAMIQUEMENT

(30) Priority: 26.07.2024 US 202463676161 P; 19.02.2025 US 202519057553
(43) Date of publication of application: 28.01.2026
(73) Proprietor: Microsoft Technology Licensing, LLC, Redmond, WA 98052-6399 (US)
(72) Inventor: Stojkovic, Jovan, Champaign, IL 61820 (US); Choukse, Esha, Redmond, WA 98052 (US); Zhang, Chaojie, Redmond, WA 98052 (US); Goiri Presa, Íñigo, Redmond, WA 98052 (US); Torrellas, Josep, Champaign, IL 61822 (US)
(74) Representative: Grünecker Patent- und Rechtsanwälte PartG mbB

(56) References cited:
- KE CHENG ET AL: "Enabling Efficient Batch Serving for LMaaS via Generation Length Prediction", ARXIV.ORG, CORNELL UNIVERSITY LIBRARY, 201 OLIN LIBRARY CORNELL UNIVERSITY ITHACA, NY 14853, 7 June 2024 (2024-06-07), XP091780718
- GRANT WILKINS ET AL: "Offline Energy-Optimal LLM Serving: Workload-Based Energy Models for LLM Inference on Heterogeneous Systems", ARXIV.ORG, CORNELL UNIVERSITY LIBRARY, 201 OLIN LIBRARY CORNELL UNIVERSITY ITHACA, NY 14853, 4 July 2024 (2024-07-04), XP091817220
- HU CUNCHEN ET AL: "Inference without Interference: Disaggregate LLM Inference for Mixed Downstream Workloads", ARXIV.ORG, 20 January 2024 (2024-01-20), XP093343112, Retrieved from the Internet <URL:https://arxiv.org/pdf/2401.11181> [retrieved on 20251130]
- JOVAN STOJKOVIC ET AL: "DynamoLLM: Designing LLM Inference Clusters for Performance and Energy Efficiency", ARXIV.ORG, CORNELL UNIVERSITY LIBRARY, 201 OLIN LIBRARY CORNELL UNIVERSITY ITHACA, NY 14853, 1 August 2024 (2024-08-01), XP091840155

## Description

### CROSS-REFERENCE TO RELATED APPLICATIONS

This U.S. non-provisional application claims priority to U.S. provisional application number 63/676,161, entitled "LLM INFERENCE CLUSTERS FOR PERFORMANCE AND ENERGY EFFICIENCY," and filed July 26, 2024.

### BACKGROUND

The exponential growth in the adoption of generative large language models (LLMs) has positioned them at the core of numerous technological advancements and applications. Today, we see use-cases of LLMs in various domains, such as healthcare, developer productivity, data analytics, education and others. As the popularity of LLMs increases among users, the inference clusters receive millions of queries per day resulting in large infrastructures with sophisticated software and expensive hardware systems.
KE CHENG ET AL: "Enabling Efficient Batch Serving for LMaaS via Generation Length Prediction", ARXIV.ORG, CORNELL UNIVERSITY LIBRARY, 201 OLIN LIBRARY CORNELL UNIVERSITY ITHACA, NY 14853, 7 June 2024, relates to enabling efficient batch serving for LMaaS via generation length prediction. Without knowing the generation length of requests, existing serving systems serve requests in a first-come, first-served (FCFS) manner with a fixed batch size, which leads to two problems that affect batch serving efficiency. Magnus is provided, which can accurately predict the request generation length with the user input length, application-level, and user-level semantic features.
GRANT WILKINS ET AL: "Offline Energy-Optimal LLM Serving: Workload-Based Energy Models for LLM Inference on Heterogeneous Systems", ARXIV.ORG, CORNELL UNIVERSITY LIBRARY, 201 OLIN LIBRARY CORNELL UNIVERSITY ITHACA, NY 14853, 4 July 2024, relates to offline energy-optimal LLM serving: workload-based energy models for LLM inference on heterogeneous systems. The workload-dependent energy consumption and runtime of LLM inference tasks is modeled on heterogeneous GPU-CPU systems. The models are employed to explore an offline, energy-optimal LLM workload scheduling framework.
Hu Cunchen ET AL: "Inference without Interference: Disaggregate LLM Inference for Mixed Downstream Workloads", arXiv.org, 20 January 2024, relates to inference without interference: disaggregate LLM inference for mixed downstream workloads. Inference requests are scheduled and grouped based on their characteristics. Prompts are partitioned into fixed-size chunks. Prefill and decode instances are disaggregated to run independently. A two-level scheduling algorithm augmented with predicted resource usage is used to avoid decode scheduling hotspots.

### SUMMARY

It is the object of the present invention to improve the efficiency in serving LLM requests according to request type.

This object is solved by the subject matter of the independent claims.

Preferred embodiments are defined by the dependent claims.

This Summary is provided to introduce a selection of concepts in a simplified form that are further described below in the Detailed Description.

Systems, methods, devices, and computer readable storage media described herein are directed to a dynamically reconfigurable large language model (LLM) inference cluster. The LLM inference cluster receives an inference request, and provides the inference request to an LLM instance selected from a plurality of LLM instances having varying characteristics.

Further features and advantages of the embodiments, as well as the structure and operation of various embodiments, are described in detail below with reference to the accompanying drawings.

### BRIEF DESCRIPTION OF THE DRAWINGS/FIGURES

The accompanying drawings, which are incorporated herein and form a part of the specification, illustrate embodiments and, together with the description, further serve to explain the principles of the embodiments and to enable a person skilled in the pertinent art to make and use the embodiments.
FIG. 1 shows a block diagram of an example system for a dynamically reconfigurable LLM inference cluster, in accordance with an embodiment.
FIG. 2 shows a block diagram of an example system for request processing in an LLM inference cluster based on a request type determined from an input length and a predicted output length, in accordance with an embodiment.
FIG. 3 shows a flowchart of an example process for request processing in an LLM inference cluster based on an input length, in accordance with an embodiment.
FIG. 4 shows a flowchart of an example process for request processing in an LLM inference cluster based on a request type, in accordance with an embodiment.
FIG. 5 depicts a flowchart of an example process for dynamically reconfiguring an LLM cluster using an energy performance profile, in accordance with an embodiment.
FIG. 6 shows a flowchart of an example process for increasing a number of LLM instances in a pool, in accordance with an embodiment.
FIG. 7 shows a flowchart of an example process for adjusting a model parallelism of an LLM instance, in accordance with an embodiment.
FIG. 8 shows a flowchart of an example process for adjusting a processor frequency of a processor assigned to an LLM instance, in accordance with an embodiment.
FIG. 9 shows a flowchart of an example process for request processing in an LLM inference cluster based on a request type determined from an input length and a predicted output length, in accordance with an embodiment.
FIG. 10 shows a block diagram of an example computer system in which embodiments may be implemented.

The subject matter of the present application will now be described with reference to the accompanying drawings. In the drawings, like reference numbers indicate identical or functionally similar elements. Additionally, the left-most digit(s) of a reference number identifies the drawing in which the reference number first appears.

### DETAILED DESCRIPTION

### I. Introduction

The following detailed description discloses numerous example embodiments. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

As used herein, the term "large language model" or "LLM" refers to a machine learning model trained on a large textual dataset and comprises a large number (e.g., billions) of parameters that define how the model processes input and generates output. A large textual dataset for model training typically encompasses training data curated from one or more topics that is/are relevant to the LLM, and such training data may be expressed according to a range of language patterns. A large textual dataset for training includes millions, billions, trillions, or even greater numbers of words.

As used herein, the term "service level objective" or "SLO" refer to specific, measurable target that defines a level of service. In embodiments, focus on metrics such as, but not limited to, availability, latency, throughput, and/or error rates over a defined time period.

### II. Embodiments for LLM Inference Clusters for Performance and Energy Efficiency

Large language models (LLMs) are artificial intelligence systems trained on vast amounts of text data to process and generate human-like language. These models can perform a wide range of language-related tasks, including text generation, translation, summarization, and conversation. LLMs improve through extensive training on diverse datasets, enabling them to provide coherent and contextually relevant responses. The size of LLMs, which is typically measured in the number of parameters, has an impact on its accuracy and performance. "Parameters" as used herein with respect to an LLM are variables whose values are adjusted during training to establish how input data is transformed into the desired output by an LLM. LLMs tend to have large numbers of parameters, including in the millions, billions, and greater numbers of parameters. Generally, larger models with more parameters can capture more complex language patterns and generate more contextually appropriate responses. However, larger models are also associated with higher computational and energy costs.

The exponential growth in the adoption of generative LLMs has positioned them at the core of numerous technological advancements and applications in various domains, such as healthcare, developer productivity, data analytics, education and others. LLMs are typically hosted on large computing clusters (e.g., in the cloud) as an LLM inference cluster. In an LLM inference cluster, LLM instances receive requests including an input (e.g., a natural language question or prompt), and determines (i.e., infers) an appropriate output (e.g., a contextual response to the input). LLM inference clusters are typically hosted by a cloud provider that agrees to provide a level or quality of service through a set of Service Level Objectives (SLOs), for example, availability, latency, throughput, and/or error rates over a defined time period. As the popularity of LLMs increases among users, LLM inference clusters receive millions of queries per day resulting in large infrastructures with sophisticated software and expensive hardware systems, while maintaining strict SLOs.

To achieve such SLOs, LLM inference clusters execute LLMs on power-hungry GPUs that consume large amount of energy, resulting in excessive carbon emissions. Researchers have proposed various software and hardware techniques to improve LLM performance to meet the increasing computing demands of LLM inference clusters. While improvements to LLM performance increase throughput and/or reduce latency, these improvements do not directly consider the energy consumption associated with LLM inference environments. To reduce power consumption in cloud environments, researchers have explored techniques to adjust processor frequencies based on workload latency requirements to reduce energy consumption while meeting performance requirements. Additionally, researchers have explored power capping techniques to increase oversubscription while meeting performance requirements. While these techniques reduce power consumption of generic workloads in cloud environments, they do not consider the unique characteristics of LLM inference environments.

One aspect that has been largely overlooked is the energy consumption associated with LLM inference environments. Serving LLMs on power-hungry graphics processing units (GPUs) has emerged as a significant concern. As the popularity of LLMs increase, it is important to minimize their energy consumption and carbon emissions while maintaining high performance. Such environments present a distinct set of challenges, divergent from existing energy management schemes tailored for traditional datacenters applications.

Disclosed herein are embodiments for a dynamically reconfigurable LLM inference cluster that includes plurality of pools of LLM instances with different configurations that are optimal for different types of incoming requests. When an incoming request arrives, a cluster manager determines a request type based on an input length and an output length associated with the incoming request. Based on the determined request type, the cluster manager selects a pool of LLM instances tailored to process the determined request type in an energy-efficient manner, and provides the incoming request to the selected pool for processing.

Distinct execution behaviors of LLMs are exploited by the cluster manager. It is noted that generative LLMs are auto-regressive, meaning that while they can compute on the whole input in parallel, they serially generate the output tokens. This property leads to two computationally distinct phases in LLM inference, including a prefill phase, where the input tokens are computed in parallel, and a decode phase, where each output token is generated serially, based on all the tokens seen so far. The prefill phase is a compute-intensive phase where the computational resources required scales based on the number of input tokens. The decode phase is a memory-intensive phase where the memory resource required scale based on the number of output tokens. The prefill and decode phases in an LLM inference exhibit distinct execution behaviors. The cluster manager takes advantage of these execution behaviors by categorizing incoming requests into a plurality of categories (e.g., buckets) based on the length of the input and output associated with the incoming request.

The cluster manager can determine the input length of the incoming request by tokenizing the request into one or more input tokens, and determining the number of tokens in the request. However, due to the auto-regressive nature of the LLMs, the output length of a request is harder to determine prior to output generation by the LLM. In order to determine the output length prior to output generation, the cluster manager predicts the output length using a machine learning model trained to predict the output length based on the request (e.g., the prompt), the input length, and/or LLM model that will process the request.

The types of incoming requests can vary over time leading to highly dynamic LLM workloads. As such, a configuration of the LLM inference cluster that is energy-optimal at a given time can quickly become sub-optimal. In order to capture energy-efficiency gains available due to changes in the LLM workloads, the LLM inference cluster is dynamically reconfigured in response to the changes in the LLM workloads. Dynamically reconfiguring the LLM inference cluster allows tailors the cluster to the incoming requests as the types of incoming requests change over time.

The features described above provide an energy management framework for LLM inference environments for achieving energy-efficient and sustainable LLM inference clusters. The energy management framework exploits the unique properties of LLM inference workloads to reduce their energy consumption while meeting the performance SLOs. It also leverages multiple energy-efficiency knobs, such as scaling the number of server instances, adjusting the number of model instances executing in parallel across a number of GPUs, and/or adjusting a GPU frequency to dynamically reconfigure LLM instances in the LLM inference cluster to match fluctuations in the load of incoming requests and/or distributions of request types of the incoming requests. These and other additional features will be described in greater detail below.

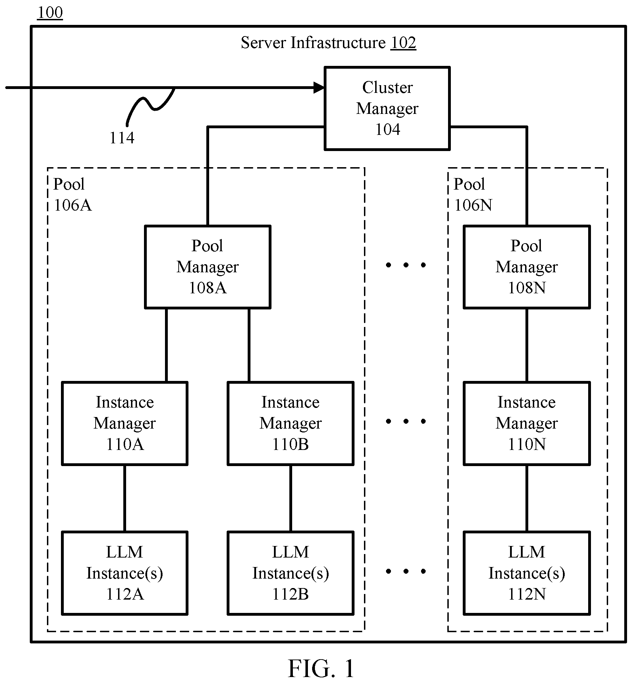

For example, FIG. 1 shows a block diagram of an example system 100 for a dynamically reconfigurable LLM inference cluster, in accordance with an embodiment. As shown in FIG. 1, system 100 includes a server infrastructure that includes a cluster manager 104 and one or more pools 106A-106N that are managed by one or more pool managers 108A-108N. In system 100, pool(s) 106A-106N further include one or more instance managers 110A-110N that are managed by pool manager(s) 108A-108N, and that manage one or more sets of LLM instances 112A-112N. System 100 is described in further detail as follows.

Server infrastructure 102 comprises a network-accessible server set (e.g., cloud-based environment or platform). In an embodiment, the underlying resources of server infrastructure 102 are co-located (e.g., housed in one or more nearby buildings with associated components such as backup power supplies, redundant data communications, environmental controls, etc.) to form a datacenter, are distributed across different regions, and/or are arranged in other manners. Various example implementations of server infrastructure 102 are described below in reference to FIG. 11 (e.g., network-based server infrastructure 1170, and/or components thereof).

In embodiments, a plurality of managers that manage the LLM inference cluster are organized in a hierarchy that eliminates centralized control bottlenecks and reduces computation overheads by assigning specific optimization tasks to individual managers. For instance, instead of searching for a globally optimal configuration, managers at each level of the hierarchy set locally optimal values for individual knobs under the constraints imposed by the upper-level managers. This approach allows the managers at different levels of the hierarchy to operate at varying time scales (e.g., from minutes for node adjustments to seconds for frequency tuning) to balance the frequency and benefits of configuration changes and their corresponding overhead costs. In embodiments, overheads associated with the configuration changes (e.g., scaling overhead, resharding overhead, etc.) are profiled and provided to the plurality of managers to allow the managers to periodically calculate the energy benefits versus the costs of reconfiguration at each level of the hierarchy. For instance, the managers evaluate whether the energy savings gained from reconfiguring justify the associated overheads and downtime to ensure that energy benefits outweigh the transition costs.

In embodiments, the reconfiguration process is staggered such that only a subset of LLM instances is reconfigured at a time in order to reduce the risk of significant downtime that can cause low availability and performance degradation. For instance, this approach ensures that while some LLM instances are undergoing reconfiguration, other LLM instances remain operational to handle ongoing workloads, thereby minimizing service disruption. In an embodiment, a priority-based scheduling algorithm is employed to determine which LLM instances to reconfigure first based on their current load, the performance impact, and the potential energy savings.

In embodiments, the managers are implemented in distributed manner, where cluster manager 104 and pool manager(s) 108A-108N are collocated in a dedicated VM to ensure robust management, and instance manager(s) 110A-110N are collocated with the VMs running LLM instance(s) 112A-112N to facilitate close monitoring and control of individual LLM instances. In embodiments, the managers are implemented as gRPC servers to enable efficient and scalable communication through RPC messages.

In embodiments, managers at each level of the hierarchy operates under the conditions imposed by the upper level, computes a dedicated knob to adjust model parameters of LLM instances in the pools, and forwards further constraints to the managers at a lower level of the hierarchy. For instance, cluster manager 104 residing at the top level (e.g., root) of the hierarchy periodically determines the number of pools to include in the cluster and/or the number of LLM instances to include in the pools, and imposes these constraints on the lower levels of the hierarchy. In embodiments, the next lower level of the hierarchy includes pool manager(s) 108A-108N that select a model parallelism parameter value for pools managed by the pool manager, and imposes this constraint on the lower level of the hierarchy. In embodiments, the next lower level of the hierarchy includes instance manager(s) 110A-110N that select a process frequency for processors (e.g., GPUs) executing LLM instance(s) 112A-112N managed by the instance manager. In embodiments, pool manager(s) 108A-108N and instance manager(s) 110A-110N employ energy performance profiles (e.g., model profiles 210) to determine the optimal parameter values for LLM instance(s) 112A-112N to optimize energy consumption while satisfying SLOs associated with inference request 114.

Cluster manager 104 is configured to manage the LLM inference cluster by directing an inference request 114 to pool(s) 106A-106N, and dynamically reconfiguring pool(s) 106A-106N to optimize energy-efficiency while meeting SLOs. In embodiments, cluster manager 104 receives inference request 114, predicts the request type associated with inference request 114, and forwards inference request 114 to pool(s) 106A-106N based on the request type. In embodiments, cluster manager 104 determines the request type based on an input length and an output length associated with the request. In an embodiment, the input length is determined by tokenizing the request into one or more input tokens, and classifying the request into one or more input length categories (e.g., short, medium, long, etc.).

Due to the auto-regressive nature of the LLMs, cluster manager 104, in embodiments, predicts the output length of the request prior to output generation based on the request (e.g., the prompt), the input length, and/or LLM model employed to process the request. For instance, cluster manager 104 predict the output length using classification models that are generated using machine learning techniques based on a labeled training data set that includes previous requests and their corresponding outputs labeled with an output length label (e.g., short, medium, long, etc.). In instances, the classification models are specific to a particular LLM model and/or type/class of LLM model (e.g., GPT, BERT, etc.), and used to predict the output length for a request to be executed by the particular LLM model or type/class of LLM model. In an embodiment, cluster manager 104 requests an output length from LLM instance(s) 112A-112N using a prompt, that includes, for example, but not limited to, "Please predict the length of the output for this request" and the request.

In embodiments, cluster manager 104 determines the request type of inference request 114 by categorizing inference request 114 into a plurality of categories (e.g., buckets) based on the length (e.g., number) of input and output tokens. Examples of these categories include an SS bucket for requests with a short input and a short output, an SM bucket for requests with a short input and a medium output, an SL bucket for requests having a short input and a long output, an MS bucket for requests having a medium input and a short output, an MM bucket for requests having a medium input and a medium output, an ML bucket for requests having a medium input and a long output, an LS bucket for requests having a long input and a short output, an LM bucket for requests having a long input and a medium output, and/or an LL bucket for requests having a long input and a long output. The number of buckets can include more or fewer buckets based on the desired level of granularity to balance resource fragmentation and energy-efficiency. For instance, employing fewer classification (e.g., buckets) will limit the ability to fine-tune the system configurations for optimal energy-efficiency, while employing more classifications (e.g. buckets) will lead to greater resource fragmentation that may also impact energy efficiency.

Based on the determined request type, cluster manager 104 selects a pool of LLM instances (e.g., pool(s) 106A-106N) that is tailored to the determined request type, and provides inference request 114 to the selected pool for processing. Pool(s) 106A-106N are tailored to specific request types by fine-tuning configuration settings to optimize LLM instances for the specific request types. If the selected pool of LLM instances (e.g., pool(s) 106A-106N) is currently overloaded, cluster manager 104, in embodiments, forwards inference request 114 to the next available pool of LLM instances (e.g., pool(s) 106A-106N) associated with a larger request type. By selecting the pool of LLM instances that is tailored for the request type, inference request 114 is processed in an energy-efficient manner.

In addition to the request length (e.g., input length, output length, etc.), the incoming load of the LLM inference cluster can affect the resource requirements for processing the requests. For example, during periods of low load, the LLM instances have a larger SLO slack to exploit, allowing them to process the requests at low-frequency configurations to conserve energy, and, conversely, during periods of high load, the LLM instances have less SLO slack, requiring them to run at high-frequency configurations to satisfy the SLOs. Additionally, the compute properties of inference requests depend on the requested model, where different models (e.g., GPT, BERT, etc.) have different energy and/or performance profiles. For instance, compute-bound models with a large number of parameters are more sensitive to changes in the processor (e.g., GPU) frequency and/or model parallelism settings and often need to operate at higher processor frequencies and/or higher model parallelism, while sparse models with a relatively small number of parameters can often meet SLOs while operating at lower processor frequencies and/or lower model parallelism. In embodiments, pool manager(s) 108A-108N and/or instance manager(s) 110A-110N adjust processor frequencies and/or model parallelism parameters in order to increase energy efficiency while satisfying SLOs.

The types of incoming requests can vary over time leading to highly dynamic LLM workloads. As such, a configuration of the LLM inference cluster that is energy-optimal at a given time can quickly become sub-optimal. For instance, LLM workloads can change over time due to changes, such as, but not limited to, changes in request lengths (e.g., input length, output length, etc.), changes in request load (e.g., changes in the distribution of types of requests, etc.), and changes in service (e.g., changes in the model requested by the service, etc.). In order to capture energy-efficiency gains available due to changes in the LLM workloads, the LLM inference cluster is dynamically reconfigured in response to the changes in the LLM workloads. For example, the LLM inference cluster can be dynamically reconfigured by changing the number of pools of LLM instances in the cluster, changing the number of LLM instances in the pools of LLM instances, changing the number of parallel LLM instances, and/or changing the frequency of the processors hosting the LLM instances. Dynamically reconfiguring the LLM inference cluster allows tailors the cluster to the incoming requests as the types of incoming requests change over time.

In embodiments, cluster manager 104 periodically re-evaluates how many pools are needed and how many model instances are needed per pool based on the system load. For instance, cluster manager 104 predicts the incoming load for each request type based on historical data and uses the predicted incoming load to size the instance pools, and determines a number of instances per pool to support the expected throughput of a given request type. For example, cluster manager 104 determines the number of instances by dividing the predicted peak load of a request type within an epoch (e.g., 30 minutes) by the maximum load that a single node can support. In embodiments, consolidating the load onto a small number of nodes reduces costs associated with lightly-loaded processors (e.g., GPUs).

In embodiments, cluster manager 104 allocates sufficient resources to ensure that each instance pool is sized to handle peak loads associated with a request type. However, this approach increases resource fragmentation when the peak load does not fully saturate the assigned number of instances, thereby resulting in overprovisioning that affects the overall energy efficiency gains. In embodiments, cluster manager 104 assigns one instance less than the number of instances needed to support the expected throughput of the request type to a given instance pool and directs a fraction of the load of the request type to an instance pool associated with the next larger request type for the duration of the next scheduling epoch (*e.g.,* 30 minutes). This approach reduces overprovisioning of pools to the instance pool associated with the largest request type, thereby minimizing aggregate fragmentation within the cluster.

In embodiments, cluster manager 104 determines a number of pools (e.g., pool(s) 106A-106N) to include in the inference cluster based on historical data such that requests with distinct SLO requirements and/or compute properties (compute or memory bound) are processed by different pools (e.g., pool(s) 106A-106N). In embodiments, cluster manager 104 resizes pool(s) 106A-106N by changing the number of LLM instance(s) 112A-112N in pool(s) 106A-106N, and/or by combining (e.g., merging) or splitting pool(s) 106A-106N based on the predicted load of the request types. For instance, as a predicted load of request type associated with a pool (e.g., pool(s) 106A-106N) decreases below a threshold value, cluster manager 104 merges the pool with the next pool (e.g., pool(s) 106A-106N) that serves longer requests (e.g., longer input length and/or longer output length) in order to avoid resource fragmentation.

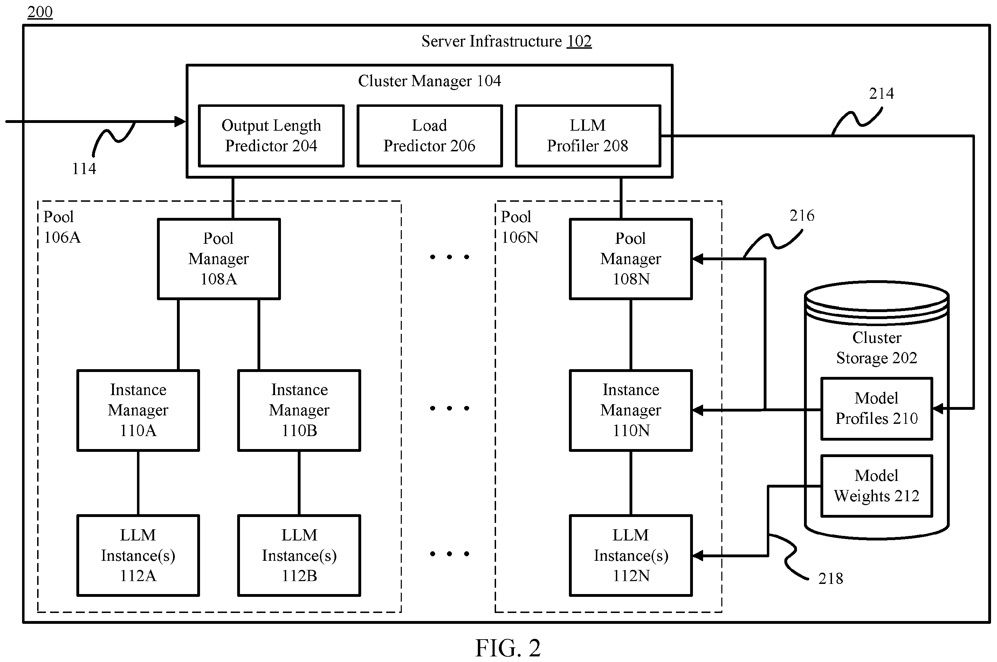

In conventional systems, adjusting the number of LLM instances in a pool is a multi-step process that involves instantiating a new virtual machine (VM) in the cloud, initializing a distributed multi-processor (e.g., multi-GPU) environment (e.g., Ray, MPI, etc.), downloading the model weights, setting up the inference engine, and installing the weights and a key-value cache on the processors (e.g., GPUs). In instances, these steps can take as long as 10 minutes to complete, and add significant overhead to the inference process if implemented on the critical path. In embodiments, cluster manager 104 reduces scaling overheads by keeping model weights cached locally within the LLM inference cluster to avoid the need to fetch them from a global repository, initializing VMs from a snapshot with the entire state already initialized to reduce the boot-up time, and creating new VMs in the background and outside of the critical path inference workload handling in order to reduce latency impact on executing workloads. In embodiments, the snapshot used for VM instantiation includes pre-loaded libraries, drivers (e.g., GPU drivers), and inference engine configurations. Cluster manager 104 will be described in greater detail below in conjunction with FIG. 2.

Pool(s) 106A-106N comprise LLM inference cluster resources that are partitioned based on a request type, where each pool is configured to process requests of a request type in an energy-efficient manner. In embodiments, pool(s) 106A-106N are managed by pool manager(s) 108A-108N, respectively. In embodiments, pool(s) 106A-106N one or more instance manager(s) 110A-110N that manage sets of LLM instance(s) 112A-112N, respectively. In embodiments, cluster manager 104 resizes pool(s) 106A-106N by changing the number of LLM instance(s) 112A-112N in pool(s) 106A-106N, and/or by combining (e.g., merging) or splitting pool(s) 106A-106N based on the predicted load of the request types.

Pool manager(s) 108A-108N are configured to manage pool(s) 106A-106N, respectively, by balancing incoming inference requests (e.g., inference request 114) across LLM instance(s) 112A-112N, and periodically determining whether to adjust a model parallelism setting of LLM instance(s) 112A-112N. In embodiments, pool manager(s) 108A-108N are assigned a number (e.g., N) of processors (e.g., GPUs) by cluster manager 104, and periodically (e.g., every 5 minutes) determines, based on an energy performance profile, whether to adjust a model parallelism setting (e.g., number or processors per LLM instance) that optimizes energy-efficiency while meeting SLOs. In embodiments, pool manager(s) 108A-108N reduce resharding overheads by optimizing the initialization of workers and the distribution of weights across the processors (e.g., GPUs). For instance, distributed workers (*e.g*., Ray) on all GPUs are maintained within a node (e.g., server) to ensure that the system is always ready for parallel execution on any number of GPUs without re-initializing the multi-processor (e.g., multi-GPU) environment. In embodiments, a graph matching algorithm is employed to map the processors (e.g., GPUs) to hold specific model weights that are divided into smaller transfer units (*i.e.,* one eighth of the weight). In embodiments, pool manager(s) 108A-108N cause the transfer units to be transferred across the GPUs using direct communications (e.g., NVLink) to avoid latency associated with CPU involvement.

Instance manager(s) 110A-110N are configured to manage sets of LLM instance(s) 112A-112N, respectively, by scheduling incoming inference requests (e.g., inference request 114) to the inference engine executing on LLM instance(s) 112A-112N, and periodically determining whether to adjust a processor (e.g., GPU) frequency of a processor (e.g., GPU) assigned to LLM instance(s) 112A-112N. In embodiments, instance manager(s) 110A-110N periodically (e.g., every 5 seconds) determines, based on an energy performance profile, whether to adjust the processor (e.g., GPU) frequency to optimize energy-efficiency while meeting SLOs. In embodiments, instance manager(s) 110A-110N uses an energy performance profile associated with LLM instance(s) 112A-112N to filter out processor (e.g., GPU) frequencies that violate the SLO at the current load, and select a processor (e.g., GPU) frequency that optimizes the energy consumption from the remaining processor (e.g., GPU) frequencies. In embodiments, instance manager(s) 110A-110N reduce frequency adjustment overheads by keeping the system management software (e.g., System Management Interface (SMI) monitor program) loaded directly in memory to eliminate the need to reload the program every time a frequency adjustment is required, thereby significantly reducing latency.

Adjusting a processor (e.g., GPU) frequency typically involves invoking the operating system, communicating with the processor (e.g., GPU) driver via system calls, and performing hardware interactions via firmware. On average, adjusting the processor (e.g., GPU) frequency can take around 50-80ms. In comparison, one decode iteration of an LLM inference process takes around 20-30ms. Consequently, the time spent adjusting the processor (e.g., GPU) frequency can significantly impact the overall performance of the LLM inference process by potentially doubling the latency of an LLM inference step, thereby reducing the throughput of LLM inference system significantly. In configurations, instance manager(s) 110A-110N reduce frequency adjustment overheads by keeping the system management software (e.g., System Management Interface (SMI) monitor program) loaded directly in memory to eliminate the need to reload the program every time a frequency adjustment is required, thereby significantly reducing latency. Additionally, in an embodiment, the cluster manager is run in privileged mode to allow direct and rapid adjustments to processor (e.g., GPU) frequencies, thereby avoiding overheads associated with OS-user interactions.

In embodiments, instance manager(s) 110A-110N handle mispredictions (e.g., output length misprediction, load misprediction, etc.) by monitoring a request queue associated with instance manager(s) 110A-110N. For instance, when instance manager(s) 110A-110N detect that its request queue exceeds a predetermined length, indicating that the rate of request processing is lower than the rate of request arrival, instance manager(s) 110A-110N trigger an emergency event to perform proactive actions to meet SLOs. In embodiments, as a first proactive action, instance manager(s) 110A-110N track the time to the deadline in the request queue and try to reorder the requests in its request queue to prioritize requests that are about to miss their deadline (e.g., SLO). If some requests will miss their deadlines even after request reordering, instance manager(s) 110A-110N, in embodiments, ramp up the frequency of its processors (e.g., GPUs) as a second proactive action to increase the request processing rate. If the backlog persists or worsens, instance manager(s) 110A-110N, in embodiments, reschedule one or more requests that have not started their execution as a third proactive action. For example, instance manager(s) 110A-110N reschedules the request to another LLM instance (e.g., LLM instance(s) 112A-112N) within pool(s) 106A-106N managed by pool manager(s) 108A-108N. If request rescheduling is insufficient to reduce the backlog, instance manager(s) 110A-110N, in embodiments, terminate one or more requests that have been queue for longer than a predetermined threshold period to signal users to retry their requests, thereby allowing cluster manager 104 to redirect the retried requests (e.g., inference request 114) to alternative pool(s) 106A-106N that have sufficient capacity to process the retried requests.

LLM instance(s) 112A-112N are configured to process incoming inference requests (e.g., inference request 114). In embodiments, LLM instance(s) 112A-112N are sets of LLM instances that are configured differently than other sets of LLM instance(s) 112A-112N. For instance, LLM instance(s) 112A-112N can differ in, for example, but not limited to, model instance (e.g., GPT, BERT, etc.), model size (e.g., number of parameters), model parallelism (e.g., number of processors per instance), batch size (e.g., number of inputs per inference iteration), processor frequency (e.g., GPU frequency), and/or the like.

Embodiments described herein may operate in various ways to process requests in an LLM inference cluster based on a request type determined from an input length and a predicted output length. For instance, FIG. 2 shows a block diagram of an example system 200 for request processing in an LLM inference cluster based on a request type determined from an input length and a predicted output length, in accordance with an embodiment. As shown in FIG. 2, system 200 includes server infrastructure 102, cluster manager 104, pool(s) 106A-106N, pool manager(s) 108A-108N, instance manager(s) 110A-110N, and LLM instance(s) 112A-112N. In system 200, server infrastructure 102 further includes a cluster storage 202 that stores model profiles 210, and model weights 212. Furthermore, in system 200, cluster manager 104 further includes an output length predictor 204, a load predictor 206, and an LLM profiler 208. System 200 is described in further detail as follows.

Cluster storage 202 is configured to store and/or cache information for operating and/or managing the LLM inference cluster. In embodiments, cluster storage 202 stores and/or caches model profiles 210 and model weights 212.

Output length predictor 204 is configured to predict a length (e.g., number of tokens) of an output of LLM instance(s) 112A-112N based on various factors, such as, but not limited to, a prompt of inference request 114, an input length of the prompt, a model or model type of LLM instance(s) 112A-112N, and/or the like. In embodiments, output length predictor 204 comprises one or more classification models that classify inference request 114 into one of a plurality of output lengths (e.g., short, medium, long, etc.). In embodiments, such classification models are generated using machine learning techniques based on a labeled training data set that includes previous inference requests and their corresponding outputs labeled with an output length label (e.g., short, medium, long, etc.). In embodiments, the classification models are specific to an LLM instance (e.g., LLM instance(s) 112A-112N), and used to predict the output length for a request directed to LLM instance (e.g., LLM instance(s) 112A-112N). In embodiments, output length predictor 204 predicts the output length by prompting an LLM instance (e.g., LLM instance(s) 112A-112N, etc.) for a predicted output length. An example of such a prompt can include "Please predict the length of the output for this request" and inference request 114.

Load predictor 206 is configured to predict a load of incoming requests (e.g., inference request 114) according to the request type of the incoming requests. In embodiments, load predictor 206 employs a template-based approach that uses historical data to model load patterns based on request type over a predetermined period (e.g., one week), and predict the load of incoming requests of the request type.

LLM profiler 208 is configured to generate energy performance profiles 214 for LLM models by processing inference requests of varying lengths (e.g., varying input length and/or varying output length), using varying model parallelism (e.g., Tensor parallelism, etc.), using varying processor frequencies (e.g., 800-1980MHz at steps of 200MHz), and at various load levels (e.g., up to maximum throughput), and extrapolating the output for intermediate load levels. In embodiments, energy performance profiles 214 are model-specific and takes, as input, the load, request length, the model parallelism, and the processor (e.g., GPU) frequency, and outputs the expected energy consumption and expected performance. In embodiments, the performance is measured using various metrics, such as, but not limited to, time to first token (TTFT) which measures the latency of generating the first output token (including the request queuing delay and the latency of the prefill phase), time between tokens (TBT) which measures the latency to generate each new output token, and throughput. In embodiments, energy consumption is measured in Watt-hours (Wh). In embodiments, LLM profiler 208 generates the energy and performance of LLM models using the interp1d function from the SciPy Python library for precise interpolation and analysis of the resulting datasets.

Model profiles 210 comprise energy performance profiles associated with LLM instance(s) 112A-112N that are generated by LLM profiler 208. In embodiments, model profiles 210 are received from LLM profiler 208 as energy performance profiles 214, and provided to pool manager(s) 108A-108N and/or instance manager(s) 110A-110N as energy performance profiles 216. As many services employ the same underlying models, model profiles 210 are, in embodiments, reused across services to reduce profiling overheads. For instance, model profiles 210 associated with services are stored in a global repository according to the service, and then cached locally in a cluster (e.g., in cluster storage 202, in cluster manager 104, in pool manager(s) 108A-108N, in instance manager(s) 110A-110N, etc.) when a service is deployed in the cluster.

In embodiments, cluster manager 104, in pool manager(s) 108A-108N, in instance manager(s) 110A-110N use the energy performance profiles 210 to optimizes energy consumption meeting performance constraints (e.g., SLOs). In embodiments, this is achieved by solving an optimization problem using a mixed integer linear programming (MILP) solver. For instance, the MILP solver determines how many instances of each tensor parallelism are needed, at which frequency they should run, and which load should be assigned to each instance, while assuming that all instances of a given parallelism run at the same frequency and receive fair-share amount of work. In embodiments, the optimization problem is to minimize the total energy consumption based on various constraints, such as, but not limited to, the total number of processors (e.g., GPUs) used by all instance types does not exceed the assigned number of processors (e.g., GPUs), the load assigned to individual instances sums up to the total expected load, and/or the expected performance of all instances with the assigned load satisfies the SLOs. In embodiments, the optimization problem is solved in a distributed manner in order to reduce the search-space. For instance, cluster manager 104 determines the number of pool(s) 106A-106N and the number of LLM instance(s) 112A-112N per pool, while pool manager(s) 108A-108N determine the model parallelism (e.g., Tensor parallelism) for LLM instance(s) 112A-112N, and instance manager(s) 110A-110N determine the processor frequency for LLM instance(s) 112A-112N.

Model weights 212 comprise numerical parameters (e.g., values) that are used by LLM instance(s) 112A-112N to generate an output based on the input (e.g., prompt). In embodiments, model weights 212 are determined during a training process to minimize an error between the model's predictions and the actual target values. In embodiments, model weights 212 are provided to LLM instance(s) 112A-112N and loaded into memory of processors (e.g., GPUs) executing LLM instance(s) 112A-112N. In embodiments model weights 212 are sharded based on a model parallelism parameter determined by pool manager(s) 108A-108N and distributed among processors (e.g., GPUs) assigned to LLM instance(s) 112A-112N to allow processors (e.g., GPUs) to process inference requests (e.g., inference request 114) in parallel.

In embodiments, adjusting the model parallelism of LLM instances is performed using two operations, including first resharding and transferring model weights to the memory of the correct processors (e.g., GPUs) assigned to the LLM instance, and second, updating the LLM inference engine needs to synchronize the processors (e.g., GPUs) assigned to the LLM instance. In conventional systems, the LLM inference engine is stopped in order to transfer the model weights from the processors (e.g., GPUs) currently assigned to the LLM instance to the new processors (e.g., GPUs) assigned to the LLM instance, and then re-started. This process adds significant overheads if performed on the critical path. In embodiments, pool manager(s) 108A-108N reduce resharding overheads by optimizing the initialization of workers and the distribution of weights across the processors (e.g., GPUs). For instance, distributed workers (*e.g*., Ray) on all GPUs are maintained within a node (e.g., server) to ensure that the system is always ready for parallel execution on any number of GPUs without re-initializing the multi-processor (e.g., multi-GPU) environment. In embodiments, pool manager(s) 108A-108N employ a graph matching algorithm to map the processors (e.g., GPUs) to hold specific model weights that are divided into smaller transfer units (*i.e.,* one eighth of the weight). For instance, pool manager(s) 108A-108N models the processors (e.g., GPUs) and transfer units (e.g., fraction of the weight) as a bipartite graph, where one set of nodes represents the GPUs and the other set represents the weights, and the edges between the sets of nodes are weighted based on the cost of transferring the weights between the processors (e.g., GPUs), and maximizes the number of stationary weights within each processor (e.g., GPU) by finding an optimal matching that minimizes the total transfer cost. In an embodiment, the transfer units are transferred across the GPUs using direct communications (e.g., NVLink) to avoid latency associated with CPU involvement.

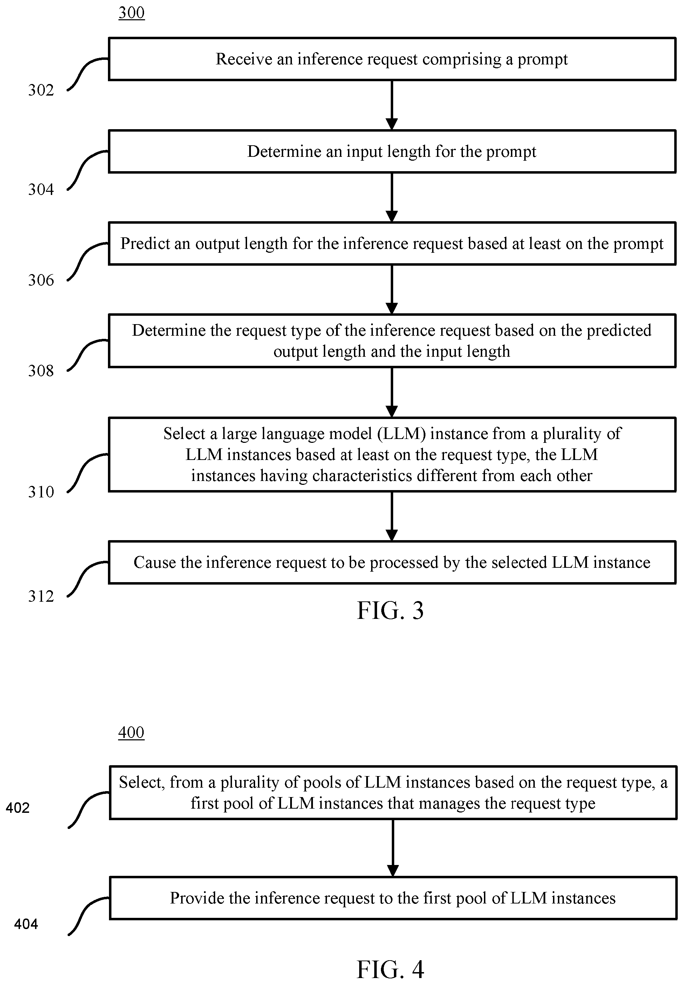

Embodiments described herein may operate in various ways to process requests in an LLM inference cluster based on an input length. For instance, FIG. 3 shows a flowchart 300 of an example process for request processing in an LLM inference cluster based on an input length, in accordance with an embodiment. Server infrastructure 102, cluster manager 104, pool(s) 106A-106N, pool manager(s) 108A-108N, instance manager(s) 110A-110N, LLM instance(s) 112A-112N, cluster storage 202, output length predictor 204, load predictor 206, LLM profiler 208, and/or model profiles 210 may, for example, operate according to flowchart 300. Note that not all steps of flowchart 300 may need to be performed in all embodiments, and in some embodiments, the steps of flowchart 300 may be performed in different orders than shown. Flowchart 300 is described as follows with respect to FIGS. 1-2 for illustrative purposes.

Flowchart 300 starts at step 302. In step 302, an inference request is received, the inference request comprising a prompt. For example, cluster manager 104 receives inference request 114.

In step 304, an input length is determined for the prompt. For example, cluster manager 104 determines an input length for inference request 114. In embodiments, cluster manager 104 tokenizes the prompt of inference request 114 to determine the length (e.g., number of tokens) in the prompt.

In step 306, an output length is predicted for the inference request based at least on the prompt. For example, output length predictor predicts an output length of inference request 114. In embodiments, output length predictor 204 comprises one or more classification models that classify inference request 114 into one of a plurality of output lengths (e.g., short, medium, long, etc.). In embodiments, such classification models are generated using machine learning techniques based on a labeled training data set that includes previous inference requests and their corresponding outputs labeled with an output length label (e.g., short, medium, long, etc.). In embodiments, the classification models are specific to an LLM instance (e.g., LLM instance(s) 112A-112N), and used to predict the output length for a request directed to LLM instance (e.g., LLM instance(s) 112A-112N). In embodiments, output length predictor 204 predicts the output length by prompting an LLM instance (e.g., LLM instance(s) 112A-112N, etc.) for a predicted output length. An example of such a prompt can include "Please predict the length of the output for this request" and inference request 114.

In step 308, a request type of the inference request is determined based on the predicted output length and an input length. For example, cluster manager 104 determines a request type of inference request 114 based on the predicted output length and the input length.

In step 310, a large language model (LLM) instance is selected from a plurality of LLM instances based at least on the request type, the LLM instances having characteristics different from each other. For example, cluster manager 104 selects an LLM instance 112A-112N based on the input length.

In step 312, the inference request is caused to be processed by the selected LLM instance. For example, cluster manager 104 provides inference request 114 to LLM instance 112A-112N for processing.

Embodiments described herein may operate in various ways to process requests in an LLM inference cluster based on a request type. For instance, FIG. 4 shows a flowchart 400 of an example process for request processing in an LLM inference cluster based on a request type, in accordance with an embodiment. Server infrastructure 102, cluster manager 104, pool(s) 106A-106N, pool manager(s) 108A-108N, instance manager(s) 110A-110N, LLM instance(s) 112A-112N, cluster storage 202, output length predictor 204, load predictor 206, LLM profiler 208, and/or model profiles 210 may, for example, operate according to flowchart 400. Note that not all steps of flowchart 400 may need to be performed in all embodiments, and in some embodiments, the steps of flowchart 400 may be performed in different orders than shown. Flowchart 400 is described as follows with respect to FIGS. 1-2 for illustrative purposes.

Flowchart 400 starts at step 402. In step 402, a first pool of LLM instances that manages the request type is selected from a plurality of pools of LLM instances based on the request type. For example, cluster manager 104 selects a pool (e.g., pool(s) 106A-106N) based on the predicted request type.

In step 404, the inference request is provided to the first pool of LLM instances. For example, cluster manager 104 provides inference request 114 to pool(s) 106A-106N for processing.

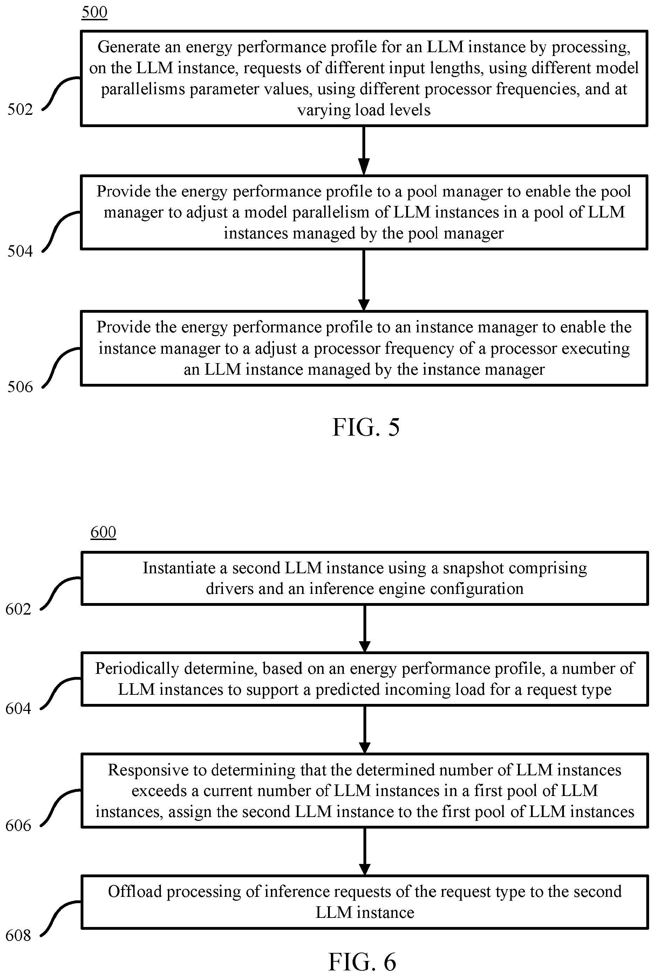

Embodiments described herein may operate in various ways to dynamically reconfigure an LLM cluster using an energy performance profile. For instance, FIG. 5 depicts a flowchart 500 of an example process for dynamically reconfiguring an LLM cluster using an energy performance profile, in accordance with an embodiment. Server infrastructure 102, cluster manager 104, pool(s) 106A-106N, pool manager(s) 108A-108N, instance manager(s) 110A-110N, LLM instance(s) 112A-112N, cluster storage 202, output length predictor 204, load predictor 206, LLM profiler 208, and/or model profiles 210 may, for example, operate according to flowchart 500. Note that not all steps of flowchart 500 may need to be performed in all embodiments, and in some embodiments, the steps of flowchart 500 may be performed in different orders than shown. Flowchart 500 is described as follows with respect to FIGS. 1-2 for illustrative purposes.

Flowchart 500 starts at step 502. In step 502, an energy performance profile is generated for an LLM instance by processing, on the LLM instance, requests of different input lengths, using different model parallelisms parameter values, using different processor frequencies, and at varying load levels. For example, LLM profiler 208 generates energy performance profile 214 by processing inference requests of varying lengths (e.g., varying input length and/or varying output length), using varying model parallelism (e.g., Tensor parallelism, etc.), using varying processor frequencies (e.g., 800-1980MHz at steps of 200MHz), and at various load levels (e.g., up to maximum throughput), and extrapolating the output for intermediate load levels. In embodiments, LLM profiler 208 stores performance profile 214 in cluster storage 202 as model profiles 210.

In step 504, the energy performance profile is provided to a pool manager to enable the pool manager to adjust a model parallelism of LLM instances in a pool of LLM instances managed by the pool manager. For example, cluster storage 202 provides energy performance profiles 210 to pool manager(s) 108A-108N as energy performance profile 216. In embodiments, pool manager(s) 108A-108N periodically (e.g., every 5 minutes) determines, based on an energy performance profile, whether to adjust a model parallelism setting (e.g., number or processors per LLM instance) that optimizes energy-efficiency while meeting SLOs.

In step 506, the energy performance profile is provided to an instance manager to enable the instance manager to a adjust a processor frequency of a processor executing an LLM instance managed by the instance manager. For example, cluster storage 202 provides energy performance profiles 210 to instance manager(s) 110A-110N as energy performance profile 216. In embodiments, instance manager(s) 110A-110N periodically (e.g., every 5 seconds) determines, based on an energy performance profile 216, whether to adjust the processor (e.g., GPU) frequency to optimize energy-efficiency while meeting SLOs.

Embodiments described herein may operate in various ways to increase a number of LLM instances in a pool. For instance, FIG. 6 shows a flowchart 600 of an example process for increasing a number of LLM instances in a pool, in accordance with an embodiment. Server infrastructure 102, cluster manager 104, pool(s) 106A-106N, pool manager(s) 108A-108N, instance manager(s) 110A-110N, LLM instance(s) 112A-112N, cluster storage 202, output length predictor 204, load predictor 206, LLM profiler 208, and/or model profiles 210 may, for example, operate according to flowchart 600. Note that not all steps of flowchart 600 may need to be performed in all embodiments, and in some embodiments, the steps of flowchart 600 may be performed in different orders than shown. Flowchart 600 is described as follows with respect to FIGS. 1-2 for illustrative purposes.

Flowchart 600 starts at step 602. In step 602, a second LLM instance is instantiated using a snapshot comprising drivers and an inference engine configuration. For example, cluster manager 104 instantiates a standby LLM instance using a snapshot comprising drivers and an inference engine configuration.

In step 604, a number of LLM instances to support a predicted incoming load for the request type is periodically determined based on the energy performance profile. In embodiments, cluster manager 104 determines, based on energy performance profile 214, a number of LLM instances needed to support a predicted incoming load for a request type associated with pool(s) 106A-106N.

In step 606, the second LLM instance is assigned to the first pool of LLM instances responsive to determining that the determined number of LLM instances exceeds a current number of LLM instances in the first pool of LLM instances. For example, cluster manager 104 assigns the standby LLM instance to pool(s) 106A-106N.

In step 608, processing of inference requests of the request type is offloaded to the second LLM instance. For example, inference requests (e.g., inference request 114) of the request type are offloaded to LLM instance(s) 112A-112N newly assigned to pool(s) 106A-106N.

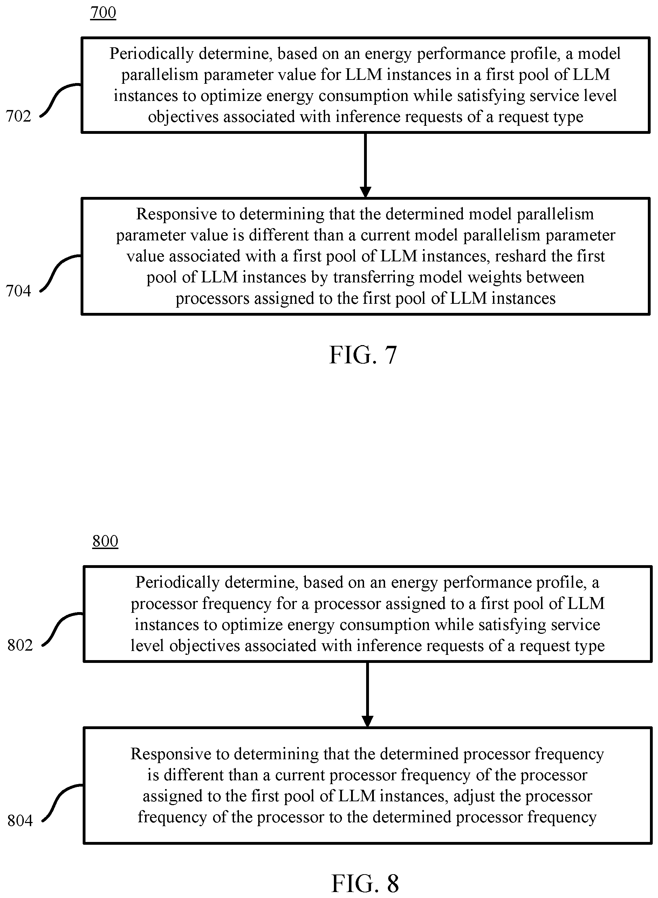

Embodiments described herein may operate in various ways to adjust a model parallelism of an LLM instance. For instance, FIG. 7 shows a flowchart 700 of an example process for adjusting a model parallelism of an LLM instance, in accordance with an embodiment. Server infrastructure 102, cluster manager 104, pool(s) 106A-106N, pool manager(s) 108A-108N, instance manager(s) 110A-110N, LLM instance(s) 112A-112N, cluster storage 202, output length predictor 204, load predictor 206, LLM profiler 208, and/or model profiles 210 may, for example, operate according to flowchart 700. Flowchart 700 is described as follows with respect to FIGS. 1-2 for illustrative purposes.

Flowchart 700 starts at step 702. In step 702, a model parallelism parameter value for LLM instances in the first pool of LLM instances to optimize energy consumption while satisfying service level objectives associated with inference requests of the request type is periodically determined based on the energy performance profile. For example, pool manager(s) 108A-108N periodically determines, based on energy performance profile 216, a model parallelism parameter for LLM instance(s) 112A-112N to optimize energy consumption of LLM instance(s) 112A-112N while satisfying SLOs.

In step 704, the first pool of LLM instances is resharded by transferring model weights between processors assigned to the first pool of LLM instances responsive to determining that the determined model parallelism parameter value is different than a current model parallelism parameter value associated with the first pool of LLM instances. For example, pool manager(s) 108A-108N reshards LLM instance(s) 112A-112N by transferring model weights 112 from processors (e.g., GPUs) previously assigned to LLM instance(s) 112A-112N to processors (e.g., GPUs) currently assigned to LLM instance(s) 112A-112N.

Embodiments described herein may operate in various ways to adjust a processor frequency of a processor assigned to an LLM instance. For instance, FIG. 8 shows a flowchart 800 of an example process for adjusting a processor frequency of a processor assigned to an LLM instance, in accordance with an embodiment. Server infrastructure 102, cluster manager 104, pool(s) 106A-106N, pool manager(s) 108A-108N, instance manager(s) 110A-110N, LLM instance(s) 112A-112N, cluster storage 202, output length predictor 204, load predictor 206, LLM profiler 208, and/or model profiles 210 may, for example, operate according to flowchart 800. Flowchart 800 is described as follows with respect to FIGS. 1-2 for illustrative purposes.

Flowchart 800 starts at step 802. In step 802, a processor frequency for a processor assigned to the first pool of LLM instances to optimize energy consumption while satisfying service level objectives associated with inference requests of the request type is periodically determined based on the energy performance profile. For example, instance manager(s) 110A-110N periodically determines, based on energy performance profile 216, a processor (e.g., GPU) frequency for processors (e.g., GPUs) assigned to LLM instance(s) 112A-112N to optimize energy consumption of LLM instance(s) 112A-112N while satisfying SLOs.

In step 804, the processor frequency of the processor to the determined processor frequency is adjusted responsive to determining that the determined processor frequency is different than a current processor frequency of the processor assigned to the first pool of LLM instances. For example, instance manager(s) 110A-110N adjusts the processor (e.g., GPU) frequency for processors (e.g., GPUs) assigned to LLM instance(s) 112A-112N responsive do determining that the determined processor (e.g., GPU) frequency is different than a current processor (e.g., GPU) frequency of processors (e.g., GPUs) assigned to LLM instance(s) 112A-112N.

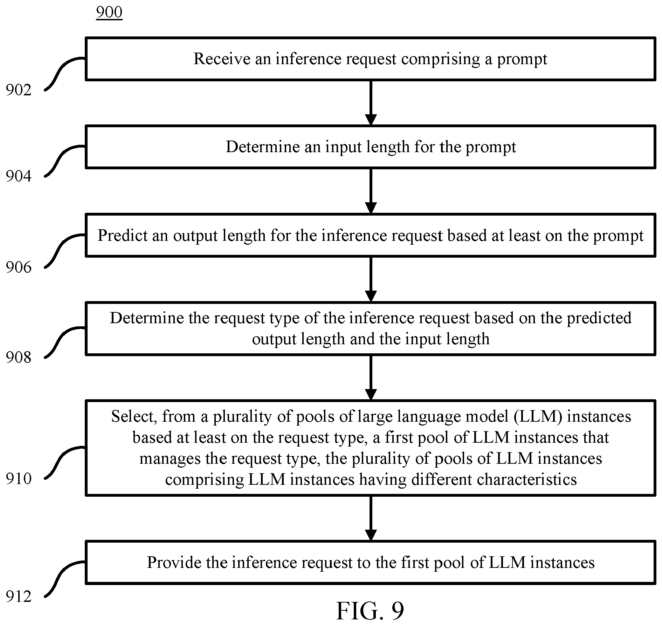

Embodiments described herein may operate in various ways to process requests in an LLM inference cluster based on a request type determined from an input length and a predicted output length. For instance, FIG. 9 shows a flowchart 900 of an example process for request processing in an LLM inference cluster based on a request type determined from an input length and a predicted output length, in accordance with an embodiment. Server infrastructure 102, cluster manager 104, pool(s) 106A-106N, pool manager(s) 108A-108N, instance manager(s) 110A-110N, LLM instance(s) 112A-112N, cluster storage 202, output length predictor 204, load predictor 206, LLM profiler 208, and/or model profiles 210 may, for example, operate according to flowchart 900. Note that not all steps of flowchart 900 may need to be performed in all embodiments, and in some embodiments, the steps of flowchart 900 may be performed in different orders than shown. Flowchart 900 is described as follows with respect to FIGS. 1-2 for illustrative purposes.

Flowchart 900 starts at step 902. In step 902, an inference request is received, the inference request comprising a prompt. For example, cluster manager 104 receives inference request 114.

In step 904, an input length is determined for the prompt. For example, cluster manger 104 determines an input length for inference request 114. In embodiments, cluster manager 104 tokenizes the prompt of inference request 114 to determine the length (e.g., number of tokens) in the prompt.

In step 906, an output length is predicted for the inference request based at least on the prompt. For example, output length predictor predicts an output length of inference request 114. In embodiments, output length predictor 204 comprises one or more classification models that classify inference request 114 into one of a plurality of output lengths (e.g., short, medium, long, etc.). In embodiments, such classification models are generated using machine learning techniques based on a labeled training data set that includes previous inference requests and their corresponding outputs labeled with an output length label (e.g., short, medium, long, etc.). In embodiments, the classification models are specific to an LLM instance (e.g., LLM instance(s) 112A-112N), and used to predict the output length for a request directed to LLM instance (e.g., LLM instance(s) 112A-112N). In embodiments, output length predictor 204 predicts the output length by prompting an LLM instance (e.g., LLM instance(s) 112A-112N, etc.) for a predicted output length. An example of such a prompt can include "Please predict the length of the output for this request" and inference request 114.

In step 908, a request type of the inference request is determined based on the predicted output length and the input length. For example, cluster manager 104 determines a request type of inference request 114 based on the predicted output length and the input length.

In step 910, a first pool of LLM instances that manages the request type is selected from a plurality of pools of LLM instances based at least on the request type, the plurality of pools of LLM instances comprising LLM instances having different characteristics. For example, cluster manager 104 selects a pool (e.g., pool(s) 106A-106N) based on the predicted request type.

In step 912, the inference request is provide to the first pool of LLM instances. For example, cluster manager 104 provides inference request 114 to pool(s) 106A-106N for processing.

### III. Example Mobile Device and Computer System Implementation

In embodiments, server infrastructure 102, cluster manager 104, pool(s) 106A-106N, pool manager(s) 108A-108N, instance manager(s) 110A-110N, and LLM instance(s) 112A-112N, cluster storage 202, output length predictor 204, load predictor 206, LLM profiler 208, model profiles 210, model weights 212, and/or the components described therein, and/or the steps of flowcharts 300, 400, 500, 600, 700, 800, and/or 900 are implemented in hardware, or hardware combined with one or both of software and/or firmware. For example, server infrastructure 102, cluster manager 104, pool(s) 106A-106N, pool manager(s) 108A-108N, instance manager(s) 110A-110N, and LLM instance(s) 112A-112N, cluster storage 202, output length predictor 204, load predictor 206, LLM profiler 208, model profiles 210, model weights 212, and/or the components described therein, and/or the steps of flowcharts 300, 400, 500, 600, 700, 800, and/or 900 are each implemented as computer program code/instructions configured to be executed in one or more processors and stored in a computer readable storage medium. Alternatively, server infrastructure 102, cluster manager 104, pool(s) 106A-106N, pool manager(s) 108A-108N, instance manager(s) 110A-110N, and LLM instance(s) 112A-112N, cluster storage 202, output length predictor 204, load predictor 206, LLM profiler 208, model profiles 210, model weights 212, and/or the components described therein, and/or the steps of flowcharts 300, 400, 500, 600, 700, 800, and/or 900 are implemented in one or more SoCs (system on chip). An SoC includes an integrated circuit chip that includes one or more of a processor (e.g., a central processing unit (CPU), microcontroller, microprocessor, digital signal processor (DSP), etc.), memory, one or more communication interfaces, and/or further circuits, and optionally executes received program code and/or include embedded firmware to perform functions.

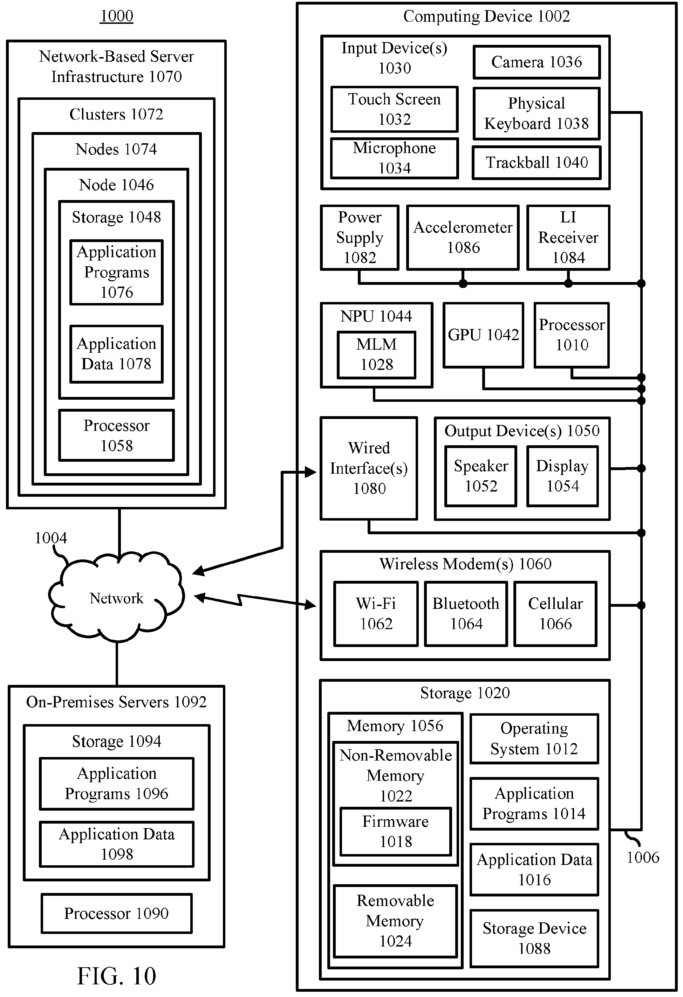

Embodiments disclosed herein can be implemented in one or more computing devices that are mobile (a mobile device) and/or stationary (a stationary device) and include any combination of the features of such mobile and stationary computing devices. Examples of computing devices in which embodiments are implementable are described as follows with respect to FIG. 10. FIG. 10 shows a block diagram of an exemplary computing environment 1000 that includes a computing device 1002. Computing device 1002 is an example of server infrastructure 102 and/or components described therein, which each include one or more of the components of computing device 1002. In some embodiments, computing device 1002 is communicatively coupled with devices (not shown in FIG. 10) external to computing environment 1000 via network 1004. Network 1004 comprises one or more networks such as local area networks (LANs), wide area networks (WANs), enterprise networks, the Internet, etc. In examples, network 1004 includes one or more wired and/or wireless portions. In some examples, network 1004 additionally or alternatively includes a cellular network for cellular communications. Computing device 1002 is described in detail as follows.

Computing device 1002 can be any of a variety of types of computing devices. Examples of computing device 1002 include a mobile computing device such as a handheld computer (e.g., a personal digital assistant (PDA)), a laptop computer, a tablet computer, a hybrid device, a notebook computer, a netbook, a mobile phone (e.g., a cell phone, a smart phone, etc.), a wearable computing device (e.g., a head-mounted augmented reality and/or virtual reality device including smart glasses), or other type of mobile computing device. In an alternative example, computing device 1002 is a stationary computing device such as a desktop computer, a personal computer (PC), a stationary server device, a minicomputer, a mainframe, a supercomputer, etc.

As shown in FIG. 10, computing device 1002 includes a variety of hardware and software components, including a processor 1010, a storage 1020, a graphics processing unit (GPU) 1042, a neural processing unit (NPU) 1044, one or more input devices 1030, one or more output devices 1050, one or more wireless modems 1060, one or more wired interfaces 1080, a power supply 1082, a location information (LI) receiver 1084, and an accelerometer 1086. Storage 1020 includes memory 1056, which includes non-removable memory 1022 and removable memory 1024, and a storage device 1088. Storage 1020 also stores an operating system 1012, application programs 1014, and application data 1016. Wireless modem(s) 1060 include a Wi-Fi modem 1062, a Bluetooth modem 1064, and a cellular modem 1066. Output device(s) 1050 includes a speaker 1052 and a display 1054. Input device(s) 1030 includes a touch screen 1032, a microphone 1034, a camera 1036, a physical keyboard 1038, and a trackball 1040. Not all components of computing device 1002 shown in FIG. 10 are present in all embodiments, additional components not shown may be present, and in a particular embodiment any combination of the components are present. In examples, components of computing device 1002 are mounted to a circuit card (e.g., a motherboard) of computing device 1002, integrated in a housing of computing device 1002, or otherwise included in computing device 1002. The components of computing device 1002 are described as follows.

In embodiments, a single processor 1010 (e.g., central processing unit (CPU), microcontroller, a microprocessor, signal processor, ASIC (application specific integrated circuit), and/or other physical hardware processor circuit) or multiple processors 1010 are present in computing device 1002 for performing such tasks as program execution, signal coding, data processing, input/output processing, power control, and/or other functions. In examples, processor 1010 is a single-core or multi-core processor, and each processor core is single-threaded or multithreaded (to provide multiple threads of execution concurrently). Processor 1010 is configured to execute program code stored in a computer readable medium, such as program code of operating system 1012 and application programs 1014 stored in storage 1020. The program code is structured to cause processor 1010 to perform operations, including the processes/methods disclosed herein. Operating system 1012 controls the allocation and usage of the components of computing device 1002 and provides support for one or more application programs 1014 (also referred to as "applications" or "apps"). In examples, application programs 1014 include common computing applications (e.g., e-mail applications, calendars, contact managers, web browsers, messaging applications), further computing applications (e.g., word processing applications, mapping applications, media player applications, productivity suite applications), one or more machine learning (ML) models, as well as applications related to the embodiments disclosed elsewhere herein. In examples, processor(s) 1010 includes one or more general processors (e.g., CPUs) configured with or coupled to one or more hardware accelerators, such as one or more NPUs 1044 and/or one or more GPUs 1042.

Any component in computing device 1002 can communicate with any other component according to function, although not all connections are shown for ease of illustration. For instance, as shown in FIG. 10, bus 1006 is a multiple signal line communication medium (e.g., conductive traces in silicon, metal traces along a motherboard, wires, etc.) present to communicatively couple processor 1010 to various other components of computing device 1002, although in other embodiments, an alternative bus, further buses, and/or one or more individual signal lines is/are present to communicatively couple components. Bus 1006 represents one or more of any of several types of bus structures, including a memory bus or memory controller, a peripheral bus, an accelerated graphics port, and a processor or local bus using any of a variety of bus architectures.

Storage 1020 is physical storage that includes one or both of memory 1056 and storage device 1088, which store operating system 1012, application programs 1014, and application data 1016 according to any distribution. Non-removable memory 1022 includes one or more of RAM (random access memory), ROM (read only memory), flash memory, a solid-state drive (SSD), a hard disk drive (e.g., a disk drive for reading from and writing to a hard disk), and/or other physical memory device type. In examples, non-removable memory 1022 includes main memory and is separate from or fabricated in a same integrated circuit as processor 1010. As shown in FIG. 10, non-removable memory 1022 stores firmware 1018 that is present to provide low-level control of hardware. Examples of firmware 1018 include BIOS (Basic Input/Output System, such as on personal computers) and boot firmware (e.g., on smart phones). In examples, removable memory 1024 is inserted into a receptacle of or is otherwise coupled to computing device 1002 and can be removed by a user from computing device 1002. Removable memory 1024 can include any suitable removable memory device type, including an SD (Secure Digital) card, a Subscriber Identity Module (SIM) card, which is well known in GSM (Global System for Mobile Communications) communication systems, and/or other removable physical memory device type. In examples, one or more of storage device 1088 are present that are internal and/or external to a housing of computing device 1002 and are or are not removable. Examples of storage device 1088 include a hard disk drive, an SSD, a thumb drive (e.g., a USB (Universal Serial Bus) flash drive), or other physical storage device.

One or more programs are stored in storage 1020. Such programs include operating system 1012, one or more application programs 1014, and other program modules and program data. Examples of such application programs include computer program logic (e.g., computer program code/instructions) for implementing server infrastructure 102, cluster manager 104, pool(s) 106A-106N, pool manager(s) 108A-108N, instance manager(s) 110A-110N, and LLM instance(s) 112A-112N, cluster storage 202, output length predictor 204, load predictor 206, LLM profiler 208, model profiles 210, model weights 212, and/or each of the components described therein, as well as any of flowcharts 300, 400, 500, 600, 700, 800, 900, and/or any individual steps thereof.

Storage 1020 also stores data used and/or generated by operating system 1012 and application programs 1014 as application data 1016. Examples of application data 1016 include web pages, text, images, tables, sound files, video data, and other data. In examples, application data 1016 is sent to and/or received from one or more network servers or other devices via one or more wired or wireless networks. Storage 1020 can be used to store further data including a subscriber identifier, such as an International Mobile Subscriber Identity (IMSI), and an equipment identifier, such as an International Mobile Equipment Identifier (IMEI). Such identifiers can be transmitted to a network server to identify users and equipment.

In examples, a user enters commands and information into computing device 1002 through one or more input devices 1030 and receives information from computing device 1002 through one or more output devices 1050. Input device(s) 1030 includes one or more of touch screen 1032, microphone 1034, camera 1036, physical keyboard 1038 and/or trackball 1040 and output device(s) 1050 includes one or more of speaker 1052 and display 1054. Each of input device(s) 1030 and output device(s) 1050 are integral to computing device 1002 (e.g., built into a housing of computing device 1002) or are external to computing device 1002 (e.g., communicatively coupled wired or wirelessly to computing device 1002 via wired interface(s) 1080 and/or wireless modem(s) 1060). Further input devices 1030 (not shown) can include a Natural User Interface (NUI), a pointing device (computer mouse), a joystick, a video game controller, a scanner, a touch pad, a stylus pen, a voice recognition system to receive voice input, a gesture recognition system to receive gesture input, or the like. Other possible output devices (not shown) can include piezoelectric or other haptic output devices. Some devices can serve more than one input/output function. For instance, display 1054 displays information, as well as operating as touch screen 1032 by receiving user commands and/or other information (e.g., by touch, finger gestures, virtual keyboard, etc.) as a user interface. Any number of each type of input device(s) 1030 and output device(s) 1050 are present, including multiple microphones 1034, multiple cameras 1036, multiple speakers 1052, and/or multiple displays 1054.

In embodiments where GPU 1042 is present, GPU 1042 includes hardware (e.g., one or more integrated circuit chips that implement one or more of processing cores, multiprocessors, compute units, etc.) configured to accelerate computer graphics (two-dimensional (2D) and/or three-dimensional (3D)), perform image processing, and/or execute further parallel processing applications (e.g., training of neural networks, etc.). Examples of GPU 1042 perform calculations related to 3D computer graphics, include 2D acceleration and framebuffer capabilities, accelerate memory-intensive work of texture mapping and rendering polygons, accelerate geometric calculations such as the rotation and translation of vertices into different coordinate systems, support programmable shaders that manipulate vertices and textures, perform oversampling and interpolation techniques to reduce aliasing, and/or support very high-precision color spaces.

In examples, NPU 1044 (also referred to as an "artificial intelligence (AI) accelerator" or "deep learning processor (DLP)") is a processor or processing unit configured to accelerate artificial intelligence and machine learning applications, such as execution of machine learning (ML) model (MLM) 1028. In an example, NPU 1044 is configured for a data-driven parallel computing and is highly efficient at processing massive multimedia data such as videos and images and processing data for neural networks. NPU 1044 is configured for efficient handling of AI-related tasks, such as speech recognition, background blurring in video calls, photo or video editing processes like object detection, etc.

In embodiments disclosed herein that implement ML models, NPU 1044 can be utilized to execute such ML models, of which MLM 1028 is an example. For instance, where applicable, MLM 1028 is a generative AI model that generates content that is complex, coherent, and/or original. For instance, a generative AI model can create sophisticated sentences, lists, ranges, tables of data, images, essays, and/or the like. An example of a generative AI model is a language model. A language model is a model that estimates the probability of a token or sequence of tokens occurring in a longer sequence of tokens. In this context, a "token" is an atomic unit that the model is training on and making predictions on. Examples of a token include, but are not limited to, a word, a character (e.g., an alphanumeric character, a blank space, a symbol, etc.), a sub-word (e.g., a root word, a prefix, or a suffix). In other types of models (e.g., image based models) a token may represent another kind of atomic unit (e.g., a subset of an image). Examples of language models applicable to embodiments herein include large language models (LLMs), text-to-image AI image generation systems, text-to-video AI generation systems, etc. A large language model (LLM) is a language model that has a high number of model parameters. In examples, an LLM has millions, billions, trillions, or even greater numbers of model parameters. Model parameters of an LLM are the weights and biases the model learns during training. Implementations of LLMs include, but are not limited to, open-source LLMs (e.g., GPT, BERT, BLOOM, Gemma, LLaMA, etc.), and/or proprietary LLMs (e.g., PaLM, JARVIS, ChatGPT, etc.). Some implementations of LLMs are transformer-based LLMs (e.g., the family of generative pre-trained transformer (GPT) models). A transformer is a neural network architecture that relies on self-attention mechanisms to transform a sequence of input embeddings into a sequence of output embeddings (e.g., without relying on convolutions or recurrent neural networks).

In further examples, NPU 1044 is used to train MLM 1028. To train MLM 1028, training data is that includes input features (attributes) and their corresponding output labels/target values (e.g., for supervised learning) is collected. A training algorithm is a computational procedure that is used so that MLM 1028 learns from the training data. Parameters/weights are internal settings of MLM 1028 that are adjusted during training by the training algorithm to reduce a difference between predictions by MLM 1028 and actual outcomes (e.g., output labels). In some examples, MLM 1028 is set with initial values for the parameters/weights. A loss function measures a dissimilarity between predictions by MLM 1028 and the target values, and the parameters/weights of MLM 1028 are adjusted to minimize the loss function. The parameters/weights are iteratively adjusted by an optimization technique, such as gradient descent. In this manner, MLM 1028 is generated through training by NPU 1044 to be used to generate inferences based on received input feature sets for particular applications. MLM 1028 is generated as a computer program or other type of algorithm configured to generate an output (e.g., a classification, a prediction/inference) based on received input features, and is stored in the form of a file or other data structure.

In examples, such training of MLM 1028 by NPU 1044 is supervised or unsupervised. According to supervised learning, input objects (e.g., a vector of predictor variables) and a desired output value (e.g., a human-labeled supervisory signal) train MLM 1028. The training data is processed, building a function that maps new data on expected output values. Example algorithms usable by NPU 1044 to perform supervised training of MLM 1028 in particular implementations include support-vector machines, linear regression, logistic regression, Naive Bayes, linear discriminant analysis, decision trees, K-nearest neighbor algorithm, neural networks, and similarity learning.

In an example of supervised learning where MLM 1028 is an LLM, MLM 1028 can be trained by exposing the LLM to (e.g., large amounts of) text (e.g., predetermined datasets, books, articles, text-based conversations, webpages, transcriptions, forum entries, and/or any other form of text and/or combinations thereof). In examples, training data is provided from a database, from the Internet, from a system, and/or the like. Furthermore, an LLM can be fine-tuned using Reinforcement Learning with Human Feedback (RLHF), where the LLM is provided the same input twice and provides two different outputs and a user ranks which output is preferred. In this context, the user's ranking is utilized to improve the model. Further still, in example embodiments, an LLM is trained to perform in various styles, e.g., as a completion model (a model that is provided a few words or tokens and generates words or tokens to follow the input), as a conversation model (a model that provides an answer or other type of response to a conversation-style prompt), as a combination of a completion and conversation model, or as another type of LLM model.

According to unsupervised learning, MLM 1028 is trained to learn patterns from unlabeled data. For instance, in embodiments where MLM 1028 implements unsupervised learning techniques, MLM 1028 identifies one or more classifications or clusters to which an input belongs. During a training phase of MLM 1028 according to unsupervised learning, MLM 1028 tries to mimic the provided training data and uses the error in its mimicked output to correct itself (i.e., correct weights and biases). In further examples, NPU 1044 perform unsupervised training of MLM 1028 according to one or more alternative techniques, such as Hopfield learning rule, Boltzmann learning rule, Contrastive Divergence, Wake Sleep, Variational Inference, Maximum Likelihood, Maximum A Posteriori, Gibbs Sampling, and backpropagating reconstruction errors or hidden state reparameterizations.

Note that NPU 1044 need not necessarily be present in all ML model embodiments. In embodiments where ML models are present, any one or more of processor 1010, GPU 1042, and/or NPU 1044 can be present to train and/or execute MLM 1028.

One or more wireless modems 1060 can be coupled to antenna(s) (not shown) of computing device 1002 and can support two-way communications between processor 1010 and devices external to computing device 1002 through network 1004, as would be understood to persons skilled in the relevant art(s). Wireless modem 1060 is shown generically and can include a cellular modem 1066 for communicating with one or more cellular networks, such as a GSM network for data and voice communications within a single cellular network, between cellular networks, or between the mobile device and a public switched telephone network (PSTN). In examples, wireless modem 1060 also or alternatively includes other radio-based modem types, such as a Bluetooth modem 1064 (also referred to as a "Bluetooth device") and/or Wi-Fi modem 1062 (also referred to as an "wireless adaptor"). Wi-Fi modem 1062 is configured to communicate with an access point or other remote Wi-Fi-capable device according to one or more of the wireless network protocols based on the IEEE (Institute of Electrical and Electronics Engineers) 802.11 family of standards, commonly used for local area networking of devices and Internet access. Bluetooth modem 1064 is configured to communicate with another Bluetooth-capable device according to the Bluetooth short-range wireless technology standard(s) such as IEEE 802.15.1 and/or managed by the Bluetooth Special Interest Group (SIG).

Computing device 1002 can further include power supply 1082, LI receiver 1084, accelerometer 1086, and/or one or more wired interfaces 1080. Example wired interfaces 1080 include a USB port, IEEE 1394 (FireWire) port, a RS-232 port, an HDMI (High-Definition Multimedia Interface) port (e.g., for connection to an external display), a DisplayPort port (e.g., for connection to an external display), an audio port, and/or an Ethernet port, the purposes and functions of each of which are well known to persons skilled in the relevant art(s). Wired interface(s) 1080 of computing device 1002 provide for wired connections between computing device 1002 and network 1004, or between computing device 1002 and one or more devices/peripherals when such devices/peripherals are external to computing device 1002 (e.g., a pointing device, display 1054, speaker 1052, camera 1036, physical keyboard 1038, etc.). Power supply 1082 is configured to supply power to each of the components of computing device 1002 and receives power from a battery internal to computing device 1002, and/or from a power cord plugged into a power port of computing device 1002 (e.g., a USB port, an A/C power port). LI receiver 1084 is useable for location determination of computing device 1002 and in examples includes a satellite navigation receiver such as a Global Positioning System (GPS) receiver and/or includes other type of location determiner configured to determine location of computing device 1002 based on received information (e.g., using cell tower triangulation, etc.). Accelerometer 1086, when present, is configured to determine an orientation of computing device 1002.

Note that the illustrated components of computing device 1002 are not required or all-inclusive, and fewer or greater numbers of components can be present as would be recognized by one skilled in the art. In examples, computing device 1002 includes one or more of a gyroscope, barometer, proximity sensor, ambient light sensor, digital compass, etc. In an example, processor 1010 and memory 1056 are co-located in a same semiconductor device package, such as being included together in an integrated circuit chip, FPGA, or system-on-chip (SOC), optionally along with further components of computing device 1002.

In embodiments, computing device 1002 is configured to implement any of the above-described features of flowcharts herein. Computer program logic for performing any of the operations, steps, and/or functions described herein is stored in storage 1020 and executed by processor 1010.

In some embodiments, server infrastructure 1070 is present in computing environment 1000 and is communicatively coupled with computing device 1002 via network 1004. Server infrastructure 1070, when present, is a network-accessible server set (e.g., a cloud-based environment or platform). As shown in FIG. 10, server infrastructure 1070 includes clusters 1072. Each of clusters 1072 comprises a group of one or more compute nodes and/or a group of one or more storage nodes. For example, as shown in FIG. 10, cluster 1072 includes nodes 1074. Each of nodes 1074 are accessible via network 1004 (e.g., in a "cloud-based" embodiment) to build, deploy, and manage applications and services. In examples, any of nodes 1074 is a storage node that comprises a plurality of physical storage disks, SSDs, and/or other physical storage devices that are accessible via network 1004 and are configured to store data associated with the applications and services managed by nodes 1074.

Each of nodes 1074, as a compute node, comprises one or more server computers, server systems, and/or computing devices. For instance, a node 1074 in accordance with an embodiment includes one or more of the components of computing device 1002 disclosed herein. Each of nodes 1074 is configured to execute one or more software applications (or "applications") and/or services and/or manage hardware resources (e.g., processors, memory, etc.), which are utilized by users (e.g., customers) of the network-accessible server set. In examples, as shown in FIG. 10, nodes 1074 includes a node 1046 that includes storage 1048 and/or one or more of a processor 1058 (e.g., similar to processor 1010, GPU 1042, and/or NPU 1044 of computing device 1002). Storage 1048 stores application programs 1076 and application data 1078. Processor(s) 1058 operate application programs 1076 which access and/or generate related application data 1078. In an implementation, nodes such as node 1046 of nodes 1074 operate or comprise one or more virtual machines, with each virtual machine emulating a system architecture (e.g., an operating system), in an isolated manner, upon which applications such as application programs 1076 are executed.

In embodiments, one or more of clusters 1072 are located/co-located (e.g., housed in one or more nearby buildings with associated components such as backup power supplies, redundant data communications, environmental controls, etc.) to form a datacenter, or are arranged in other manners. Accordingly, in an embodiment, one or more of clusters 1072 are included in a datacenter in a distributed collection of datacenters. In embodiments, exemplary computing environment 1000 comprises part of a cloud-based platform.

In an embodiment, computing device 1002 accesses application programs 1076 for execution in any manner, such as by a client application and/or a browser at computing device 1002.

In an example, for purposes of network (e.g., cloud) backup and data security, computing device 1002 additionally and/or alternatively synchronizes copies of application programs 1014 and/or application data 1016 to be stored at network-based server infrastructure 1070 as application programs 1076 and/or application data 1078. In examples, operating system 1012 and/or application programs 1014 include a file hosting service client configured to synchronize applications and/or data stored in storage 1020 at network-based server infrastructure 1070.

In some embodiments, on-premises servers 1092 are present in computing environment 1000 and are communicatively coupled with computing device 1002 via network 1004. On-premises servers 1092, when present, are hosted within an organization's infrastructure and, in many cases, physically onsite of a facility of that organization. On-premises servers 1092 are controlled, administered, and maintained by IT (Information Technology) personnel of the organization or an IT partner to the organization. Application data 1098 can be shared by on-premises servers 1092 between computing devices of the organization, including computing device 1002 (when part of an organization) through a local network of the organization, and/or through further networks accessible to the organization (including the Internet). Furthermore, in examples, on-premises servers 1092 serve applications such as application programs 1096 to the computing devices of the organization, including computing device 1002. Accordingly, in examples, on-premises servers 1092 include storage 1094 (which includes one or more physical storage devices such as storage disks and/or SSDs) for storage of application programs 1096 and application data 1098 and include a processor 1090 (e.g., similar to processor 1010, GPU 1042, and/or NPU 1044 of computing device 1002) for execution of application programs 1096. In some embodiments, multiple processors 1090 are present for execution of application programs 1096 and/or for other purposes. In further examples, computing device 1002 is configured to synchronize copies of application programs 1014 and/or application data 1016 for backup storage at on-premises servers 1092 as application programs 1096 and/or application data 1098.

Embodiments described herein may be implemented in one or more of computing device 1002, network-based server infrastructure 1070, and on-premises servers 1092. For example, in some embodiments, computing device 1002 is used to implement systems, clients, or devices, or components/subcomponents thereof, disclosed elsewhere herein. In other embodiments, a combination of computing device 1002, network-based server infrastructure 1070, and/or on-premises servers 1092 is used to implement the systems, clients, or devices, or components/subcomponents thereof, disclosed elsewhere herein.

As used herein, the terms "computer program medium," "computer-readable medium," "computer-readable storage medium," and "computer-readable storage device," etc., are used to refer to physical hardware media. Examples of such physical hardware media include any hard disk, optical disk, SSD, other physical hardware media such as RAMs, ROMs, flash memory, digital video disks, zip disks, MEMs (microelectronic machine) memory, nanotechnology-based storage devices, and further types of physical/tangible hardware storage media of storage 1020. Such computer-readable media and/or storage media are distinguished from and non-overlapping with communication media, propagating signals, and signals per se. Stated differently, "computer program medium," "computer-readable medium," "computer-readable storage medium," and "computer-readable storage device" do not encompass communication media, propagating signals, and signals per se. Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media. Embodiments are also directed to such communication media that are separate and non-overlapping with embodiments directed to computer-readable storage media.

As noted above, computer programs and modules (including application programs 1014) are stored in storage 1020. Such computer programs can also be received via wired interface(s) 1060 and/or wireless modem(s) 1060 over network 1004. Such computer programs, when executed or loaded by an application, enable computing device 1002 to implement features of embodiments discussed herein. Accordingly, such computer programs represent controllers of the computing device 1002.

Embodiments are also directed to computer program products comprising computer code or instructions stored on any computer-readable medium or computer-readable storage medium. Such computer program products include the physical storage of storage 1020 as well as further physical storage types.

### IV. Conclusion

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

In the discussion, unless otherwise stated, adjectives modifying a condition or relationship characteristic of a feature or features of an implementation of the disclosure, should be understood to mean that the condition or characteristic is defined to within tolerances that are acceptable for operation of the implementation for an application for which it is intended. Furthermore, if the performance of an operation is described herein as being "in response to" one or more factors, it is to be understood that the one or more factors may be regarded as a sole contributing factor for causing the operation to occur or a contributing factor along with one or more additional factors for causing the operation to occur, and that the operation may occur at any time upon or after establishment of the one or more factors. Still further, where "based on" is used to indicate an effect being a result of an indicated cause, it is to be understood that the effect is not required to only result from the indicated cause, but that any number of possible additional causes may also contribute to the effect. Thus, as used herein, the term "based on" should be understood to be equivalent to the term "based at least on."

Moreover, according to the described embodiments and techniques, any components of systems, computing devices, servers, applications, power prediction systems, maintenance window validators, ML models, data centers, data stores, and/or their functions may be caused to be activated for operation/performance thereof based on other operations, functions, actions, and/or the like, including initialization, completion, and/or performance of the operations, functions, actions, and/or the like.

In some example embodiments, one or more of the operations of the flowcharts described herein may not be performed. Moreover, operations in addition to or in lieu of the operations of the flowcharts described herein may be performed. Further, in some example embodiments, one or more of the operations of the flowcharts described herein may be performed out of order, in an alternate sequence, or partially (or completely) concurrently with each other or with other operations.

The embodiments described herein and/or any further systems, sub-systems, devices and/or components disclosed herein may be implemented in hardware (e.g., hardware logic/electrical circuitry), or any combination of hardware with software (computer program code configured to be executed in one or more processors or processing devices) and/or firmware.

## Claims

1. A system (100, 200, 1000) for request processing in a large language model, LLM, inference cluster, comprising:
a processor (1010, 1042, 1044, 1058, 1090); and
a memory device (1020, 1048, 1094) that stores program code (1014, 1076, 1096) executable to cause the processor to:
receive (902) an inference request (114) comprising a prompt;
determine (904) an input length for the prompt;
predict (906) an output length for the inference request (114) based at least on the prompt;
determine (908) a request type of the inference request (114) based on the predicted output length and the input length;
select (910), from a plurality of pools (106A-106N) of LLM instances (112A-112N) based at least on the request type, a first pool of LLM instances (112A-112N) that manages the request type, the plurality of pools of LLM instances comprising LLM instances having different characteristics;
provide (912) the inference request (114) to the first pool (106A-106N) of LLM instances (112A-112N);
predict an incoming load for the request type based on historical data;
redetermine a number of pools of LLM instances to include in the plurality of pools of LLM instances based on the predicted incoming load; and
redetermine a number of LLM instances to include in the first pool of LLM instances based on the predicted incoming load.

2. The system of claim 1, wherein the program code is executable to further cause the processor to:
generate an energy performance profile for an LLM instance by processing, on the LLM instance, requests of different input lengths, using different model parallelisms parameter values, using different processor frequencies, and at varying load levels.

3. The system of claim 2, wherein the program code is executable to further cause the processor to:
instantiate a second LLM instance using a snapshot comprising drivers and an inference engine configuration;
periodically determine, based on the energy performance profile, a number of LLM instances to support a predicted incoming load for the request type;
responsive to determining that the determined number of LLM instances exceeds a current number of LLM instances in the first pool of LLM instances, assign the second LLM instance to the first pool of LLM instances; and
offload processing of inference requests of the request type to the second LLM instance.

4. The system of claim 2, wherein the program code is executable to further cause the processor to perform at least one of:
provide the energy performance profile to a pool manager to enable the pool manager to adjust a model parallelism of LLM instances in a pool of LLM instances managed by the pool manager; or
provide the energy performance profile to an instance manager to enable the instance manager to adjust a processor frequency of a processor executing an LLM instance managed by the instance manager.

5. A method (900) for request processing in a large language model, LLM, inference cluster, comprising:
receiving (902) an inference request (114) comprising a prompt;
determining (904) an input length for the prompt;
predicting (906) an output length for the inference request based at least on the prompt;
determining (908) a request type of the inference request (114) based on the predicted output length and the input length;
selecting (910), from a plurality of pools (106A-106N) of LLM instances (112A-112N) based at least on the request type, a first pool of LLM instances (112A-112N) that manages the request type, the plurality of pools of LLM instances comprising LLM instances having different characteristics;
providing (912) the inference request (114) to the first pool (106A-106N) of LLM instances (112A-112N);
predicting an incoming load for the request type based on historical data;
redetermining a number of pools of LLM instances to include in the plurality of pools of LLM instances based on the predicted incoming load; and
redetermining a number of LLM instances to include in the first pool of LLM instances based on the predicted incoming load.

6. The method of claim 5, further comprising:
generating an energy performance profile for an LLM instance by processing, on the LLM instance, requests of different input lengths, using different model parallelisms parameter values, using different processor frequencies, and at varying load levels.

7. The method of claim 6, further comprising at least one of:
providing the energy performance profile to a pool manager to enable the pool manager to adjust a model parallelism of LLM instances in a pool of LLM instances managed by the pool manager; or
providing the energy performance profile to an instance manager to enable the instance manager to adjust a processor frequency of a processor executing an LLM instance managed by the instance manager.

8. The method of claim 6 or 7, further comprising:
instantiating a second LLM instance using a snapshot comprising drivers and an inference engine configuration;
periodically determining, based on the energy performance profile, a number of LLM instances to support a predicted incoming load for the request type;
responsive to determining that the determined number of LLM instances exceeds a current number of LLM instances in the first pool of LLM instances, assigning the second LLM instance to the first pool of LLM instances; and
offloading processing of inference requests of the request type to the second LLM instance.

9. The method of one of claims 6 to 8, further comprising:
periodically determining, based on the energy performance profile, a model parallelism parameter value for LLM instances in the first pool of LLM instances to optimize energy consumption while satisfying service level objectives associated with inference requests of the request type; and
responsive to determining that the determined model parallelism parameter value is different than a current model parallelism parameter value associated with the first pool of LLM instances, resharding the first pool of LLM instances by transferring model weights between processors assigned to the first pool of LLM instances.

10. The method of one of claims 6 to 8, further comprising:
periodically determining, based on the energy performance profile, a processor frequency for a processor assigned to the first pool of LLM instances to optimize energy consumption while satisfying service level objectives associated with inference requests of the request type; and
responsive to determining that the determined processor frequency is different than a current processor frequency of the processor assigned to the first pool of LLM instances, adjusting the processor frequency of the processor to the determined processor frequency.

11. The method of one of claims 6 to 10, further comprising:
triggering an event based on a determination that a rate of request processing is lower than a rate of request receipt; and
in response to said triggering, performing, with respect to a queue associated with an LLM instance of the first pool of LLM instances, at least one of:
reordering requests in the queue to prioritize a request that is in jeopardy of missing a deadline,
increasing a frequency of a processor that processes requests in the queue,
rescheduling a request in the queue to another LLM instance of the first pool of LLM instances, or
canceling a request in the queue, queued for longer than a predetermined time threshold.

12. A computer-readable storage medium (1020, 1048, 1094) comprising instructions (1014, 1076, 1096) that, when executed by a processor (1010, 1042, 1044, 1058, 1090), cause the processor to perform a method for request processing in a large language model, LLM, inference cluster, the method comprising:
receiving (902) an inference request (114) comprising a prompt;
determining (904) an input length for the prompt;
predicting (906) an output length for the inference request (114) based at least on the prompt;
determining (908) a request type of the inference request (114) based on the predicted output length and the input length;
selecting (910), from a plurality of pools (106A-106N) of LLM instances (112A-112N) based at least on the request type, a first pool (106A-106N) of LLM instances (112A-112N) that manages the request type, the plurality of pools (106A-106N) of LLM instances (112A-112N) comprising LLM instances (112A-112N) having different characteristics;
providing (912) the inference request (114) to the first pool (106A-106N) of LLM instances (112A-112N);
predicting an incoming load for the request type based on historical data;
redetermining a number of pools of LLM instances to include in the plurality of pools of LLM instances based on the predicted incoming load; and
redetermining a number of LLM instances to include in the first pool of LLM instances based on the predicted incoming load.

13. The computer-readable storage medium of claim 12, wherein, the instructions are executed by the processor to further cause the processor to:
generate an energy performance profile for an LLM instance by processing, on the LLM instance, requests of different input lengths, using different model parallelisms parameter values, using different processor frequencies, and at varying load levels.

14. The computer-readable storage medium of claim 13, wherein the instructions are executed by the processor to further cause the processor to:
instantiate a second LLM instance using a snapshot comprising drivers and an inference engine configuration;
periodically determine, based on the energy performance profile, a number of LLM instances to support a predicted incoming load for the request type;
responsive to determining that the determined number of LLM instances exceeds a current number of LLM instances in the first pool of LLM instances, assign the second LLM instance to the first pool of LLM instances; and
offload processing of inference requests of the request type to the second LLM instance.

15. The computer-readable storage medium of claim 13, wherein the instructions are executed by the processor to further cause the processor to perform at least one of:
provide the energy performance profile to a pool manager to enable the pool manager to adjust a model parallelism of LLM instances in a pool of LLM instances managed by the pool manager; or
provide the energy performance profile to an instance manager to enable the instance manager to adjust a processor frequency of a processor executing an LLM instance managed by the instance manager.

## Patentansprüche

1. System (100, 200, 1000) zur Anforderungsverarbeitung in einem Inferenzcluster für ein großes Sprachmodell (LLM), umfassend:
einen Prozessor (1010, 1042, 1044, 1058, 1090); und
eine Speichervorrichtung (1020, 1048, 1094), die Programmcode (1014, 1076, 1096) speichert, der ausführbar ist, um den Prozessor zu veranlassen:
eine Inferenzanforderung (114), die einen Prompt umfasst, zu empfangen (902);
eine Eingabelänge für den Prompt zu bestimmen (904);
eine Ausgabelänge für die Inferenzanforderung (114) zumindest basierend auf dem Prompt vorherzusagen (906);
einen Anforderungstyp der Inferenzanforderung (114) basierend auf der vorhergesagten Ausgabelänge und der Eingabelänge zu bestimmen (908);
aus einer Mehrzahl von Pools (106A-106N) von LLM-Instanzen (112A-112N) zumindest basierend auf dem Anforderungstyp einen ersten Pool von LLM-Instanzen (112A-112N), der den Anforderungstyp verwaltet, auszuwählen (910), wobei die Mehrzahl von Pools von LLM-Instanzen LLM-Instanzen mit unterschiedlichen Eigenschaften umfasst;
die Inferenzanforderung (114) an den ersten Pool (106A-106N) von LLM-Instanzen (112A-112N) bereitzustellen (912);
eine eingehende Last für den Anforderungstyp basierend auf historischen Daten vorherzusagen;
eine Anzahl von Pools von LLM-Instanzen, die in die Mehrzahl von Pools von **LLM-**Instanzen aufzunehmen sind, basierend auf der vorhergesagten eingehenden Last erneut zu bestimmen; und
eine Anzahl von LLM-Instanzen, die in den ersten Pool von LLM-Instanzen aufzunehmen sind, basierend auf der vorhergesagten eingehenden Last erneut zu bestimmen.

2. System nach Anspruch 1, wobei der Programmcode ausführbar ist, um den Prozessor ferner zu veranlassen:
ein Energie-Leistungsprofil für eine LLM-Instanz zu erzeugen, indem auf der LLM-Instanz Anforderungen unterschiedlicher Eingabelängen unter Verwendung unterschiedlicher Parameterwerte von Modellparallelismen, unter Verwendung unterschiedlicher Prozessorfrequenzen und bei unterschiedlichen Lastniveaus verarbeitet werden.

3. System nach Anspruch 2, wobei der Programmcode ausführbar ist, um den Prozessor ferner zu veranlassen:
eine zweite LLM-Instanz unter Verwendung eines Snapshots zu instanziieren, der Treiber und eine Inferenz-Engine-Konfiguration umfasst;
periodisch, basierend auf dem Energie-Leistungsprofil, eine Anzahl von LLM-Instanzen zu bestimmen, um eine vorhergesagte eingehende Last für den Anforderungstyp zu bewältigen;
als Reaktion auf die Bestimmung, dass die bestimmte Anzahl von LLM-Instanzen eine aktuelle Anzahl von LLM-Instanzen in dem ersten Pool von LLM-Instanzen übersteigt, die zweite LLM-Instanz dem ersten Pool von LLM-Instanzen zuzuweisen; und
die Verarbeitung von Inferenzanforderungen des Anforderungstyps auf die zweite LLM-Instanz auszulagern.

4. System nach Anspruch 2, wobei der Programmcode ausführbar ist, um den Prozessor ferner zu veranlassen, mindestens eines der Folgenden durchzuführen:
das Energie-Leistungsprofil an einen Pool-Manager bereitzustellen, um dem Pool-Manager zu ermöglichen, eine Modellparallelität von LLM-Instanzen in einem von dem Pool-Manager verwalteten Pool von LLM-Instanzen anzupassen; oder
das Energie-Leistungsprofil an einen Instanz-Manager bereitzustellen, um dem Instanz-Manager zu ermöglichen, eine Prozessorfrequenz eines Prozessors anzupassen, der eine von dem Instanz-Manager verwaltete LLM-Instanz ausführt.

5. Verfahren (900) zur Anforderungsverarbeitung in einem Inferenzcluster für ein großes Sprachmodell (LLM), umfassend:
Empfangen (902) einer Inferenzanforderung (114), die einen Prompt umfasst;
Bestimmen (904) einer Eingabelänge für den Prompt;
Vorhersagen (906) einer Ausgabelänge für die Inferenzanforderung zumindest basierend auf dem Prompt;
Bestimmen (908) eines Anforderungstyps der Inferenzanforderung (114) basierend auf der vorhergesagten Ausgabelänge und der Eingabelänge;
Auswählen (910), aus einer Mehrzahl von Pools (106A-106N) von LLM-Instanzen (112A-112N), zumindest basierend auf dem Anforderungstyp, eines ersten Pools von LLM-Instanzen (112A-112N), der den Anforderungstyp verwaltet, wobei die Mehrzahl von Pools von LLM-Instanzen LLM-Instanzen mit unterschiedlichen Eigenschaften umfasst;
Bereitstellen (912) der Inferenzanforderung (114) an den ersten Pool (106A-106N) von LLM-Instanzen (112A-112N);
Vorhersagen einer eingehenden Last für den Anforderungstyp basierend auf historischen Daten;
erneutes Bestimmen einer Anzahl von Pools von LLM-Instanzen, die in die Mehrzahl von Pools von LLM-Instanzen aufzunehmen sind, basierend auf der vorhergesagten eingehenden Last; und
erneutes Bestimmen einer Anzahl von LLM-Instanzen, die in den ersten Pool von LLM-Instanzen aufzunehmen sind, basierend auf der vorhergesagten eingehenden Last.

6. Verfahren nach Anspruch 5, ferner umfassend:
Erzeugen eines Energie-Leistungsprofils für eine LLM-Instanz durch Verarbeiten, auf der LLM-Instanz, von Anforderungen unterschiedlicher Eingabelängen unter Verwendung unterschiedlicher Parameterwerte von Modellparallelismen, unter Verwendung unterschiedlicher Prozessorfrequenzen und bei unterschiedlichen Lastniveaus.

7. Verfahren nach Anspruch 6, ferner umfassend mindestens eines von:
Bereitstellen des Energie-Leistungsprofils an einen Pool-Manager, um dem Pool-Manager zu ermöglichen, eine Modellparallelität von LLM-Instanzen in einem von dem Pool-Manager verwalteten Pool von LLM-Instanzen anzupassen; oder
Bereitstellen des Energie-Leistungsprofils an einen Instanz-Manager, um dem Instanz-Manager zu ermöglichen, eine Prozessorfrequenz eines Prozessors anzupassen, der eine von dem Instanz-Manager verwaltete LLM-Instanz ausführt.

8. Verfahren nach Anspruch 6 oder 7, ferner umfassend:
Instanziieren einer zweiten LLM-Instanz unter Verwendung eines Snapshots, der Treiber und eine Inferenz-Engine-Konfiguration umfasst;
periodisches Bestimmen, basierend auf dem Energie-Leistungsprofil, einer Anzahl von LLM-Instanzen, um eine vorhergesagte eingehende Last für den Anforderungstyp zu bewältigen;
als Reaktion auf die Bestimmung, dass die bestimmte Anzahl von LLM-Instanzen eine aktuelle Anzahl von LLM-Instanzen in dem ersten Pool von LLM-Instanzen übersteigt, Zuweisen der zweiten LLM-Instanz zu dem ersten Pool von LLM-Instanzen; und
Auslagern der Verarbeitung von Inferenzanforderungen des Anforderungstyps auf die zweite LLM-Instanz.

9. Verfahren nach einem der Ansprüche 6 bis 8, ferner umfassend:
periodisches Bestimmen, basierend auf dem Energie-Leistungsprofil, eines Modellparallelitätsparameterwerts für LLM-Instanzen in dem ersten Pool von LLM-Instanzen, um den Energieverbrauch zu optimieren, während Service-Level-Ziele erfüllt werden, die mit Inferenzanforderungen des Anforderungstyps verbunden sind; und
als Reaktion auf die Bestimmung, dass der bestimmte Modellparallelitätsparameterwert von einem aktuellen Modellparallelitätsparameterwert verschieden ist, der mit dem ersten Pool von LLM-Instanzen verbunden ist, Neupartitionieren des ersten Pools von LLM-Instanzen durch Übertragen von Modellgewichten zwischen Prozessoren, die dem ersten Pool von LLM-Instanzen zugewiesen sind.

10. Verfahren nach einem der Ansprüche 6 bis 8, ferner umfassend:
periodisches Bestimmen, basierend auf dem Energie-Leistungsprofil, einer Prozessorfrequenz für einen dem ersten Pool von LLM-Instanzen zugewiesenen Prozessor, um den Energieverbrauch zu optimieren, während Service-Level-Ziele erfüllt werden, die mit Inferenzanforderungen des Anforderungstyps verbunden sind; und
als Reaktion auf die Bestimmung, dass die bestimmte Prozessorfrequenz von einer aktuellen Prozessorfrequenz des dem ersten Pool von LLM-Instanzen zugewiesenen Prozessors verschieden ist, Anpassen der Prozessorfrequenz des Prozessors an die bestimmte Prozessorfrequenz.

11. Verfahren nach einem der Ansprüche 6 bis 10, ferner umfassend:
Auslösen eines Ereignisses basierend auf einer Bestimmung, dass eine Rate der Anforderungsverarbeitung niedriger ist als eine Rate des Anforderungseingangs; und
als Reaktion auf dieses Auslösen, Durchführen, in Bezug auf eine Warteschlange, die einer LLM-Instanz des ersten Pools von LLM-Instanzen zugeordnet ist, mindestens eines der Folgenden:
Umordnen von Anforderungen in der Warteschlange, um eine Anforderung zu priorisieren, bei der die Gefahr besteht, eine Frist zu versäumen,
Erhöhen einer Frequenz eines Prozessors, der Anforderungen in der Warteschlange verarbeitet,
erneutes Einplanen einer Anforderung in der Warteschlange für eine andere LLM-Instanz des ersten Pools von LLM-Instanzen, oder
Abbrechen einer Anforderung in der Warteschlange, die länger als ein vorbestimmter Zeitschwellenwert in die Warteschlange eingereiht ist.

12. Computerlesbares Speichermedium (1020, 1048, 1094), umfassend Anweisungen (1014, 1076, 1096), die, wenn sie von einem Prozessor (1010, 1042, 1044, 1058, 1090) ausgeführt werden, den Prozessor veranlassen, ein Verfahren zur Anforderungsverarbeitung in einem Inferenzcluster für ein großes Sprachmodell (LLM) durchzuführen, wobei das Verfahren umfasst:
Empfangen (902) einer Inferenzanforderung (114), die einen Prompt umfasst;
Bestimmen (904) einer Eingabelänge für den Prompt;
Vorhersagen (906) einer Ausgabelänge für die Inferenzanforderung (114) zumindest basierend auf dem Prompt;
Bestimmen (908) eines Anforderungstyps der Inferenzanforderung (114) basierend auf der vorhergesagten Ausgabelänge und der Eingabelänge;
Auswählen (910), aus einer Mehrzahl von Pools (106A-106N) von LLM-Instanzen (112A-112N), zumindest basierend auf dem Anforderungstyp, eines ersten Pools (106A-106N) von LLM-Instanzen (112A-112N), der den Anforderungstyp verwaltet, wobei die Mehrzahl von Pools (106A-106N) von LLM-Instanzen (112A-112N) LLM-Instanzen (112A-112N) mit unterschiedlichen Eigenschaften umfasst;
Bereitstellen (912) der Inferenzanforderung (114) an den ersten Pool (106A-106N) von LLM-Instanzen (112A-112N);
Vorhersagen einer eingehenden Last für den Anforderungstyp basierend auf historischen Daten;
erneutes Bestimmen einer Anzahl von Pools von LLM-Instanzen, die in die Mehrzahl von Pools von LLM-Instanzen aufzunehmen sind, basierend auf der vorhergesagten eingehenden Last; und
erneutes Bestimmen einer Anzahl von LLM-Instanzen, die in den ersten Pool von LLM-Instanzen aufzunehmen sind, basierend auf der vorhergesagten eingehenden Last.

13. Computerlesbares Speichermedium nach Anspruch 12, wobei die Anweisungen von dem Prozessor ausgeführt werden, um den Prozessor ferner zu veranlassen:
ein Energie-Leistungsprofil für eine LLM-Instanz zu erzeugen, indem auf der LLM-Instanz Anforderungen unterschiedlicher Eingabelängen unter Verwendung unterschiedlicher Parameterwerte von Modellparallelismen, unter Verwendung unterschiedlicher Prozessorfrequenzen und bei unterschiedlichen Lastniveaus verarbeitet werden.

14. Computerlesbares Speichermedium nach Anspruch 13, wobei die Anweisungen von dem Prozessor ausgeführt werden, um den Prozessor ferner zu veranlassen:
eine zweite LLM-Instanz unter Verwendung eines Snapshots zu instanziieren, der Treiber und eine Inferenz-Engine-Konfiguration umfasst;
periodisch, basierend auf dem Energie-Leistungsprofil, eine Anzahl von LLM-Instanzen zu bestimmen, um eine vorhergesagte eingehende Last für den Anforderungstyp zu bewältigen;
als Reaktion auf die Bestimmung, dass die bestimmte Anzahl von LLM-Instanzen eine aktuelle Anzahl von LLM-Instanzen in dem ersten Pool von LLM-Instanzen übersteigt, die zweite LLM-Instanz dem ersten Pool von LLM-Instanzen zuzuweisen; und
die Verarbeitung von Inferenzanforderungen des Anforderungstyps auf die zweite LLM-Instanz auszulagern.

15. Computerlesbares Speichermedium nach Anspruch 13, wobei die Anweisungen von dem Prozessor ausgeführt werden, um den Prozessor ferner zu veranlassen, mindestens eines der Folgenden durchzuführen:
das Energie-Leistungsprofil an einen Pool-Manager bereitzustellen, um dem Pool-Manager zu ermöglichen, eine Modellparallelität von LLM-Instanzen in einem von dem Pool-Manager verwalteten Pool von LLM-Instanzen anzupassen; oder
das Energie-Leistungsprofil an einen Instanz-Manager bereitzustellen, um dem Instanz-Manager zu ermöglichen, eine Prozessorfrequenz eines Prozessors anzupassen, der eine von dem Instanz-Manager verwaltete LLM-Instanz ausführt.

## Revendications

1. Système (100, 200, 1000) pour le traitement de requêtes dans une grappe d'inférence de grand modèle de langage (LLM), comprenant :
un processeur (1010, 1042, 1044, 1058, 1090) ; et
un dispositif de mémoire (1020, 1048, 1094) qui stocke un code de programme (1014, 1076, 1096) exécutable pour amener le processeur à :
recevoir (902) une requête d'inférence (114) comprenant une invite ;
déterminer (904) une longueur d'entrée pour l'invite ;
prédire (906) une longueur de sortie pour la requête d'inférence (114) sur la base d'au moins l'invite ;
déterminer (908) un type de requête de la requête d'inférence (114) sur la base de la longueur de sortie prédite et de la longueur d'entrée ;
sélectionner (910), parmi une pluralité de pools (106A-106N) d'instances de LLM (112A-112N), sur la base d'au moins le type de requête, un premier pool d'instances de LLM (112A-112N) qui gère le type de requête, la pluralité de pools d'instances de LLM comprenant des instances de LLM présentant des caractéristiques différentes ;
fournir (912) la requête d'inférence (114) au premier pool (106A-106N) d'instances de LLM (112A-112N) ;
prédire une charge entrante pour le type de requête sur la base de données historiques;
redéterminer un nombre de pools d'instances de LLM à inclure dans la pluralité de pools d'instances de LLM sur la base de la charge entrante prédite ; et
redéterminer un nombre d'instances de LLM à inclure dans le premier pool d'instances de LLM sur la base de la charge entrante prédite.

2. Système selon la revendication 1, dans lequel le code de programme est exécutable pour amener en outre le processeur à :
générer un profil de performance énergétique pour une instance de LLM en traitant, sur l'instance de LLM, des requêtes de longueurs d'entrée différentes, en utilisant différentes valeurs de paramètre de parallélismes de modèle, en utilisant différentes fréquences de processeur et à des niveaux de charge variables.

3. Système selon la revendication 2, dans lequel le code de programme est exécutable pour amener en outre le processeur à :
instancier une seconde instance de LLM à l'aide d'un instantané comprenant des pilotes et une configuration de moteur d'inférence ;
déterminer périodiquement, sur la base du profil de performance énergétique, un nombre d'instances de LLM pour prendre en charge une charge entrante prédite pour le type de requête ;
en réponse à la détermination selon laquelle le nombre déterminé d'instances de LLM dépasse un nombre actuel d'instances de LLM dans le premier pool d'instances de LLM, affecter la seconde instance de LLM au premier pool d'instances de LLM ; et
décharger le traitement de requêtes d'inférence du type de requête vers la seconde instance de LLM.

4. Système selon la revendication 2, dans lequel le code de programme est exécutable pour amener en outre le processeur à effectuer au moins l'une des opérations suivantes:
fournir le profil de performance énergétique à un gestionnaire de pool pour permettre au gestionnaire de pool d'ajuster un parallélisme de modèle d'instances de LLM dans un pool d'instances de LLM géré par le gestionnaire de pool ; ou
fournir le profil de performance énergétique à un gestionnaire d'instance pour permettre au gestionnaire d'instance d'ajuster une fréquence de processeur d'un processeur exécutant une instance de LLM gérée par le gestionnaire d'instance.

5. Procédé (900) de traitement de requêtes dans une grappe d'inférence de grand modèle de langage (LLM), comprenant :
la réception (902) d'une requête d'inférence (114) comprenant une invite ;
la détermination (904) d'une longueur d'entrée pour l'invite ;
la prédiction (906) d'une longueur de sortie pour la requête d'inférence sur la base d'au moins l'invite ;
la détermination (908) d'un type de requête de la requête d'inférence (114) sur la base de la longueur de sortie prédite et de la longueur d'entrée ;
la sélection (910), parmi une pluralité de pools (106A-106N) d'instances de LLM (112A-112N), sur la base d'au moins le type de requête, d'un premier pool d'instances de LLM (112A-112N) qui gère le type de requête, la pluralité de pools d'instances de LLM comprenant des instances de LLM présentant des caractéristiques différentes ;
la fourniture (912) de la requête d'inférence (114) au premier pool (106A-106N) d'instances de LLM (112A-112N) ;
la prédiction d'une charge entrante pour le type de requête sur la base de données historiques ;
la redétermination d'un nombre de pools d'instances de LLM à inclure dans la pluralité de pools d'instances de LLM sur la base de la charge entrante prédite ; et
la redétermination d'un nombre d'instances de LLM à inclure dans le premier pool d'instances de LLM sur la base de la charge entrante prédite.

6. Procédé selon la revendication 5, comprenant en outre :
la génération d'un profil de performance énergétique pour une instance de LLM en traitant, sur l'instance de LLM, des requêtes de longueurs d'entrée différentes, en utilisant différentes valeurs de paramètre de parallélismes de modèle, en utilisant différentes fréquences de processeur et à des niveaux de charge variables.

7. Procédé selon la revendication 6, comprenant en outre au moins l'une des opérations suivantes :
la fourniture du profil de performance énergétique à un gestionnaire de pool pour permettre au gestionnaire de pool d'ajuster un parallélisme de modèle d'instances de LLM dans un pool d'instances de LLM géré par le gestionnaire de pool ; ou
la fourniture du profil de performance énergétique à un gestionnaire d'instance pour permettre au gestionnaire d'instance d'ajuster une fréquence de processeur d'un processeur exécutant une instance de LLM gérée par le gestionnaire d'instance.

8. Procédé selon la revendication 6 ou 7, comprenant en outre :
l'instanciation d'une seconde instance de LLM à l'aide d'un instantané comprenant des pilotes et une configuration de moteur d'inférence ;
la détermination périodique, sur la base du profil de performance énergétique, d'un nombre d'instances de LLM pour prendre en charge une charge entrante prédite pour le type de requête ;
en réponse à la détermination selon laquelle le nombre déterminé d'instances de LLM dépasse un nombre actuel d'instances de LLM dans le premier pool d'instances de LLM, l'affectation de la seconde instance de LLM au premier pool d'instances de LLM; et
le déchargement du traitement de requêtes d'inférence du type de requête vers la seconde instance de LLM.

9. Procédé selon l'une des revendications 6 à 8, comprenant en outre :
la détermination périodique, sur la base du profil de performance énergétique, d'une valeur de paramètre de parallélisme de modèle pour des instances de LLM dans le premier pool d'instances de LLM afin d'optimiser la consommation d'énergie tout en satisfaisant des objectifs de niveau de service associés à des requêtes d'inférence du type de requête ; et
en réponse à la détermination selon laquelle la valeur déterminée de paramètre de parallélisme de modèle est différente d'une valeur actuelle de paramètre de parallélisme de modèle associée au premier pool d'instances de LLM, le repartitionnement du premier pool d'instances de LLM par transfert de poids de modèle entre des processeurs affectés au premier pool d'instances de LLM.

10. Procédé selon l'une des revendications 6 à 8, comprenant en outre :
la détermination périodique, sur la base du profil de performance énergétique, d'une fréquence de processeur pour un processeur affecté au premier pool d'instances de LLM afin d'optimiser la consommation d'énergie tout en satisfaisant des objectifs de niveau de service associés à des requêtes d'inférence du type de requête ; et
en réponse à la détermination selon laquelle la fréquence de processeur déterminée est différente d'une fréquence de processeur actuelle du processeur affecté au premier pool d'instances de LLM, l'ajustement de la fréquence de processeur du processeur à la fréquence de processeur déterminée.

11. Procédé selon l'une des revendications 6 à 10, comprenant en outre :
le déclenchement d'un événement sur la base d'une détermination selon laquelle un taux de traitement des requêtes est inférieur à un taux de réception des requêtes ; et
en réponse audit déclenchement, l'exécution, relativement à une file d'attente associée à une instance de LLM du premier pool d'instances de LLM, d'au moins l'une des opérations suivantes :
réorganiser des requêtes dans la file d'attente afin de prioriser une requête risquant de ne pas respecter une échéance,
augmenter une fréquence d'un processeur qui traite des requêtes dans la file d'attente,
replanifier une requête dans la file d'attente vers une autre instance de LLM du premier pool d'instances de LLM, ou
annuler une requête dans la file d'attente, mise en file d'attente pendant une durée supérieure à un seuil temporel prédéterminé.

12. Support de stockage lisible par ordinateur (1020, 1048, 1094), comprenant des instructions (1014, 1076, 1096) qui, lorsqu'elles sont exécutées par un processeur (1010, 1042, 1044, 1058, 1090), amènent le processeur à mettre en œuvre un procédé de traitement de requêtes dans une grappe d'inférence de grand modèle de langage (LLM), le procédé comprenant :
la réception (902) d'une requête d'inférence (114) comprenant une invite ;
la détermination (904) d'une longueur d'entrée pour l'invite ;
la prédiction (906) d'une longueur de sortie pour la requête d'inférence (114) sur la base d'au moins l'invite ;
la détermination (908) d'un type de requête de la requête d'inférence (114) sur la base de la longueur de sortie prédite et de la longueur d'entrée ;
la sélection (910), parmi une pluralité de pools (106A-106N) d'instances de LLM (112A-112N), sur la base d'au moins le type de requête, d'un premier pool (106A-106N) d'instances de LLM (112A-112N) qui gère le type de requête, la pluralité de pools (106A-106N) d'instances de LLM (112A-112N) comprenant des instances de LLM (112A-112N) présentant des caractéristiques différentes ;
la fourniture (912) de la requête d'inférence (114) au premier pool (106A-106N) d'instances de LLM (112A-112N) ;
la prédiction d'une charge entrante pour le type de requête sur la base de données historiques ;
la redétermination d'un nombre de pools d'instances de LLM à inclure dans la pluralité de pools d'instances de LLM sur la base de la charge entrante prédite ; et
la redétermination d'un nombre d'instances de LLM à inclure dans le premier pool d'instances de LLM sur la base de la charge entrante prédite.

13. Support de stockage lisible par ordinateur selon la revendication 12, dans lequel les instructions sont exécutées par le processeur pour amener en outre le processeur à :
générer un profil de performance énergétique pour une instance de LLM en traitant, sur l'instance de LLM, des requêtes de longueurs d'entrée différentes, en utilisant différentes valeurs de paramètre de parallélismes de modèle, en utilisant différentes fréquences de processeur et à des niveaux de charge variables.

14. Support de stockage lisible par ordinateur selon la revendication 13, dans lequel les instructions sont exécutées par le processeur pour amener en outre le processeur à :
instancier une seconde instance de LLM à l'aide d'un instantané comprenant des pilotes et une configuration de moteur d'inférence ;
déterminer périodiquement, sur la base du profil de performance énergétique, un nombre d'instances de LLM pour prendre en charge une charge entrante prédite pour le type de requête ;
en réponse à la détermination selon laquelle le nombre déterminé d'instances de LLM dépasse un nombre actuel d'instances de LLM dans le premier pool d'instances de LLM, affecter la seconde instance de LLM au premier pool d'instances de LLM ; et
décharger le traitement de requêtes d'inférence du type de requête vers la seconde instance de LLM.

15. Support de stockage lisible par ordinateur selon la revendication 13, dans lequel les instructions sont exécutées par le processeur pour amener en outre le processeur à effectuer au moins l'une des opérations suivantes :
fournir le profil de performance énergétique à un gestionnaire de pool pour permettre au gestionnaire de pool d'ajuster un parallélisme de modèle d'instances de LLM dans un pool d'instances de LLM géré par le gestionnaire de pool ; ou
fournir le profil de performance énergétique à un gestionnaire d'instance pour permettre au gestionnaire d'instance d'ajuster une fréquence de processeur d'un processeur exécutant une instance de LLM gérée par le gestionnaire d'instance.
